# EUROPÄISCHE PATENTSCHRIFT

(11) **EP 2 917 279 B1**
(45) Veröffentlichungstag und Bekanntmachung des Hinweises auf die Patenterteilung: **14.12.2016**
(21) Anmeldenummer: 13783906.4
(22) Anmeldetag: 28.10.2013
(51) Int. Cl.: C08L 63/00, C08G 59/22, C08G 59/50, C08K 3/00, C08K 3/26, C08K 3/22

(54) **POLYCARBOXYLATETHER ALS DISPERGIERMITTEL FÜR EPOXIDHARZE**
POLYCARBOXYLATE ETHER AS DISPERSION AGENT FOR EPOXY RESINS
ETHER DE POLYCARBOXYLATE EN TANT QU'AGENT DISPERSANT POUR RÉSINES ÉPOXY

(30) Priorität: 09.11.2012 EP 12192048
(43) Veröffentlichungstag der Anmeldung: 16.09.2015
(73) Patentinhaber: Sika Technology AG, 6340 Baar (CH)
(72) Erfinder: BECK, Edda, 72810 Gomaringen (DE); SCHNABEL, Patrick, 72574 Bad Urach (DE)
(74) Vertreter: Sika Patent Attorneys
(86) Internationale Anmeldenummer: PCT/EP2013/072505
(87) Internationale Veröffentlichungsnummer: WO 2014/072200

(56) Entgegenhaltungen:
- EP-B1- 1 061 089
- WO-A2-2011/139580
- CN-A- 102 382 611
- DE-A1- 4 308 773

## Beschreibung

### Technisches Gebiet

Die vorliegende Erfindung betrifft aushärtbare Epoxidharzzusammensetzungen, enthaltend mindestens ein Epoxidharz mit durchschnittlich mehr als einer Epoxidgruppe pro Molekül, mindestens einen anorganischen Füllstoff und mindestens einen Polycarboxylatether, wobei der anorganische Füllstoff mit dem Polycarboxylatether beschichtet ist.

Die vorliegende Erfindung betrifft auch Mehrkomponentensysteme zur Herstellung der Epoxidharzzusammensetzungen, ausgehärtete Epoxidharze, Füllstoff-Komponenten für das Mehrkomponentensystem, Verwendungen und Verfahren.

### Stand der Technik

Epoxidharze werden für eine Vielzahl von Anwendungen eingesetzt, beispielsweise als Klebstoffe, Beschichtungen, Dichtmassen oder Gießmassen zur Herstellung von Formkörpern. Epoxidharze werden bei der Verarbeitung häufig mit anorganischen Füllstoffen versetzt, um die Eigenschaften der aushärtbaren Harze oder der ausgehärteten Kunststoffe zu beeinflussen. Anorganische Füllstoffe verbessern beispielsweise die Festigkeit von Epoxidharzen oder die Haftung der Harze auf Substraten. Anorganische Füllstoffe in Epoxidharzen erfüllen auch zahlreiche weitere Funktionen, beispielsweise als Flammschutzmittel, Isoliermittel, Viskositätsregler oder Farbstoffe (als Pigmente). Ein weiterer Zweck ist die Einsparung von teurem Epoxidharz und die damit verbundene Kostenersparnis.

Die Füllstoffe werden vor dem Aushärten in die noch flüssige oder pastöse Epoxidharzzusammensetzung eingearbeitet und möglichst gleichmäßig verteilt. Größere Mengen Füllstoffe können jedoch oft nicht ohne weiteres homogen in die Zusammensetzungen eingearbeitet werden. Die Aufnahmefähigkeit von Füllstoffen durch Epoxidharze ist limitiert, da die Füllstoffe die Fließfähigkeit der Epoxidharzzusammensetzung und somit die Verarbeitbarkeit deutlich verringern. Ein weiteres Problem ist die unzureichende Kompatibilität der anorganischen Füllstoffe mit den organischen Harzen, die zu einer unzureichenden Benetzung führen kann. Dadurch können Agglomerate von Füllstoffen und Inhomogenitäten entstehen, welche die Stabilität und die Fließfähigkeit der Produkte herabsetzen.

Im Stand der Technik wird das Problem der unzureichenden Kompatibilität durch Zusatzstoffe gelöst, welche die Benetzbarkeit der anorganischen Füllstoffe verbessern. So werden im Stand der Technik beispielsweise Benetzungsmittel zugesetzt, die oftmals niedermolekulare Tenside sind. Sie verringern die Oberflächenspannung an der Phasengrenze und fördern dadurch die Benetzung der Füllstoffoberflächen. Übliche Benetzungsmittel sind beispielsweise längerkettige Fettsäuren, wie Natriumstearat. Wegen der geringen Kettenlängen solcher Tenside ist deren Dispergierwirkung jedoch gering. Nachteilig ist auch, dass Epoxidzusammensetzungen mit Tensiden zur Schaumbildung neigen.

Zur Lösung des Problems werden im Stand der Technik auch beschichtete Füllstoffe eingesetzt. Dabei wird die Oberfläche der anorganischen Füllstoffe, beispielsweise solcher aus Siliciumdioxid, durch Silanierung mit Organosilanen modifiziert. Je nach eingesetzten Silanierungsmittel wird die Oberfläche beispielsweise mit Hydroxygruppen oder Ethergruppen ausgestattet. Geeignete Silanierungsmittel sind kommerziell erhältlich und werden beispielsweise von der Firma Evonik, DE, unter der Markenbezeichnung Dynasilan angeboten. Allerdings sind Oberflächenbeschichtungen durch Silanierung relativ aufwändig. Das Verfahren ist daher aus Zeit- und Kostengründen kaum für Anwender geeignet, die einen Füllstoff mit möglichst wenig Aufwand an eine spezielle Epoxidharzzusammensetzung anpassen müssen.

Eine weitere Klasse von Zusatzmitteln zur Verbesserung der Kompatibilität von anorganischen Füllstoffen mit aushärtbaren Polymerzusammensetzungen sind Dispergiermittel auf der Basis hydrophiler Polymere. Die EP 0 417 490 A2 und EP 1 723 155 offenbaren Dispergiermittel basierend auf Phosphorsäureestern mit langkettigen Polyesterkomponenten. Solche Dispergiermittel sind kommerziell erhältlich, beispielsweise von der Firma BYK, DE, unter der Markenbezeichnung BYK-W9010. Sie weisen jedoch nicht immer ausreichende Dispergiereigenschaften für konkrete aushärtbare Polymerzusammensetzungen auf und sind zudem relativ teuer.

Die US 2010/0069552 A1 beschreibt thermoplastische Polymerzusammensetzungen insbesondere auf der Basis von Polyvinylchlorid, die anorganische Füllstoffe und Kammpolymere enthalten. Die Zusätze werden bevorzugt als trockenes Pulver in den thermoplastischen Kunststoff eingearbeitet. Thermoplastische Polymere sind strukturell von aushärtbaren Polymeren verschieden und werden daher auch nach grundlegend anderen Methoden verarbeitet.

Die DE 10 2005 005 093 A1 offenbart flüssige, wässrige Dispersionen, die Siliciumoxid und Polycarboxylatether enthalten. Die Dispersionen werden als Betonzusatzmittel eingesetzt, um die Verarbeitbarkeit zu verbessern.

Die CN102382611A offenbart eine Zusammensetzung aus 30 bis 45 Teilen Epoxidharz, 10 bis 15 Teilen Polycarboxylatether, 5 bis 30 Teilen cycloaliphatischem Amin und 100 bis 160 Teilen Füllstoff. Die Komponenten werden gemäß dem Ausführungsbeispiel vermischt und zu einer Paste verarbeitet, die anschließend ausgehärtet wird. Der hohe Mengenanteil deutet darauf hin, dass der Polycarboxylatether als strukturelle Komponente dient.

Die WO 2011/139580 A2 betrifft Zusammensetzungen, die (meth)acrylische Polymere, Plastikmaterialien und Füllstoffe enthalten. Die (meth)acrylischen Polymere mit den Bausteinen (a) bis (d) sind Polycarboxylatether. Die Füllstoffe sind bevorzugt anorganische Füllstoffe. Als Plastikmaterial wird gemäß den Ausführungsbeispielen ein ungesättigter Polyester eingesetzt. Das Polyesterharz, der anorganische Füllstoff und der PCE werden vermischt und zu einer Paste verarbeitet (Abschnitt [0113]). Konkrete Zusammensetzungen, die Epoxidharze betreffen, werden nicht beschrieben.

Insgesamt wäre es wünschenswert, verbesserte Methoden und Zusatzmittel bereitzustellen, welche in effizienter und einfacher Weise die Kompatibilität von anorganischen Füllstoffen mit aushärtbaren Epoxidharzzusammensetzungen sowie die Verarbeitungseigenschaften und das Fließverhalten von Epoxidharzprodukten verbessern.

### Aufgabe der Erfindung

Der Erfindung liegt die Aufgabe zugrunde, die oben beschriebenen Probleme zu überwinden. Es sollen Mittel und Verfahren bereitgestellt werden, um auf effiziente und einfache Weise die Einarbeitung von anorganischen Füllstoffen in Epoxidharzzusammensetzungen zu erreichen. Dabei sollen hohe Füllgrade ermöglicht werden.

Die Erfindung soll insbesondere die Verarbeitbarkeit und die Fließfähigkeit der aushärtbaren und noch nicht festen Füllstoff-haltigen Epoxidzusammensetzungen verbessern. Die Viskosität der Füllstoff-haltigen Harzzusammensetzungen soll erniedrigt werden, ohne die Eigenschaften und die Stabilität der Produkte zu beeinträchtigen. Die Epoxidharzzusammensetzungen sollen auch in Gegenwart hoher Füllstoffmengen eine gute Fließfähigkeit zeigen, die bevorzugt auch über längere Verarbeitungszeiträume erhalten bleiben soll.

Die Füllstoffe sollen gut in den aushärtbaren Harzzusammensetzungen dispergierbar sein, wobei unerwünschte Effekte, wie Entmischung, Agglomeration und Inhomogenitäten vermieden werden sollen. Die ausgehärteten Produkte sollen eine möglichst homogene Struktur aufweisen. Die Erfindung soll es dem Anwender ermöglichen, individuell für konkrete Epoxidzusammensetzungen das Fließverhalten auf einfache, effiziente und kostengünstige Weise einzustellen.

### Darstellung der Erfindung

Die der Erfindung zugrunde liegende Aufgabe wird gelöst durch Epoxidharzzusammensetzungen, Mehrkomponentensysteme, ausgehärtete Epoxidharze, Verwendungen, Verfahren und pulverförmige Komponenten gemäß den Patentansprüchen.

Gegenstand der Erfindung ist eine aushärtbare Epoxidharzzusammensetzung, enthaltend mindestens ein Epoxidharz mit durchschnittlich mehr als einer Epoxidgruppe pro Molekül, mindestens einen anorganischen Füllstoff und mindestens einen Polycarboxylatether, wobei der anorganische Füllstoff mit dem Polycarboxylatether beschichtet ist.

Epoxidharzzusammensetzungen enthalten vernetzbare Epoxidharze mit mehr als einer Epoxidgruppe pro Molekül. Diese reagieren mit geeigneten Härtern unter Ausbildung kovalenter Bindungen. Die aushärtbare Epoxidharzzusammensetzung kann erfindungsgemäß den Härter bereits enthalten, oder den Härter noch nicht enthalten. Die erfindungsgemäße Epoxidharzzusammensetzung ist aushärtbar, da die Epoxidgruppen noch nicht oder erst teilweise mit dem Härter reagiert haben. Daher ist die Zusammensetzung bevorzugt flüssig oder pastös. Sie ist bevorzugt noch nicht durch teilweises Aushärten zu einem fester Körper erstarrt.

Der anorganische Füllstoff ist mit dem Polycarboxylatether beschichtet, also an der Füllstoffoberfläche mit dem Polycarboxylatether ausgestattet. Bevorzugt ist die Beschichtung nicht kovalent an die Oberfläche gekoppelt. Erfindungsgemäß wurde gefunden, dass eine ausreichend stabile Beschichtung und Wirksamkeit auch ohne kovalente Bindung erzielt werden kann. Bevorzugt ist die Füllstoffoberfläche vollständig, das heißt, lückenlos, beschichtet. Sie kann aber auch nur teilweise beschichtet sein, beispielsweise im Mittel zu mehr als 20%, mehr als 50% oder mehr als 90%.

In einer bevorzugten Ausführungsform der Erfindung liegt der beschichtete anorganische Füllstoff in fester Form vor, insbesondere in Form eines Pulvers. Die beschichteten anorganischen Füllstoffe sind auch nach Lagerung über längere Zeiträume erfindungsgemäß einsetzbar. Ohne durch die Theorie gebunden zu sein, wird angenommen, dass Polycarboxylatether mit dem Polycarboxylat-Backbone auf der Oberfläche der Füllstoffe absorbiert werden, während die Seitenketten Polyether aufweisen, die von den Füllstoffoberflächen weg weisen und eine sterische Stabilisierung der Füllstoffpartikel bewirken. Eine solche Ausrichtung von Polycarboxylatethern auf der Oberfläche anorganischer Partikel wurde für Zementzusammensetzungen beschrieben.

In einer bevorzugten Ausführungsform wurde der anorganische Füllstoff durch Imprägnieren mit einer Lösung oder Suspension beschichtet, die den Polycarboxylatether und ein Lösungsmittel enthält oder daraus besteht. Das Imprägnieren kann auf jede geeignete Weise erfolgen. Beispielsweise kann ein festes Füllstoffgemisch vorgelegt werden, das mit einer Lösung oder Suspension des Polycarboxylatethers in dem Lösungsmittel versetzt wird, beispielsweise durch Sprühen in einem Mischer.

In einer bevorzugten Ausführungsform wird das Lösungsmittel beim Imprägnieren von dem Füllstoff an dessen Oberfläche adsorbiert. Der beschichtete Füllstoff ist dabei ein im Wesentlichen fester Füllstoff, der auf der Oberfläche mit dem Polycarboxylatether ausgestattet ist und zudem das Lösungsmittel enthält. Das Lösungsmittel an der Partikeloberfläche kann dann als Mittler zwischen der Epoxidharzmatrix und dem Polycarboxylatether wirken. Ohne an eine Theorie gebunden zu sein, wird angenommen, dass der im Lösungsmittel gelöste Polycarboxylatether einerseits die Kompatibilität zwischen Füllstoffoberfläche und Epoxidharzmatrix verbessert, andererseits durch elektrostatische Abstoßung und sterische Stabilisierung der Füllstoffpartikel das Fließverhalten des gefüllten Epoxidharzgemisches verbessert wird. Diese Ausführungsform hat zudem den Vorteil, dass keine Trocknungsschritte oder sonstigen Schritte zur Entfernung des Lösungsmittels erforderlich sind, und dass insgesamt nur eine geringe Menge Lösungsmittel erforderlich ist.

Das Lösungsmittel kann auch zumindest teilweise in das Innere des Füllstoffs diffundieren. In einer weiteren Ausführungsform kann das Lösungsmittel nach Imprägnieren des Füllstoffes teilweise oder vollständig entfernt werden, beispielsweise durch Trocknen.

Allgemein wird das Lösungsmittel so ausgewählt, dass sich der Polycarboxylatether im Lösungsmittel gut löst. Gleichzeitig sollte das Lösungsmittel mit der Epoxidharzzusammensetzung kompatibel sein, d.h. nicht in unerwünschter Weise mit dieser interagieren. Bevorzugt ist das Lösungmittel in der Zusammensetzung inert, das heißt nicht reaktiv. Das Lösungsmittel ist bevorzugt ein organisches Lösungsmittel. Wasser ist im Allgemeinen nicht oder nur wenig geeignet, da es, wie andere protische Lösungsmittel auch, die Epoxidharzreaktion in unerwünschter Weise beeinflussen kann. Sofern Wasser oder ein anderes nicht kompatibles Lösungsmittel eingesetzt wird, um den Füllstoff zu imprägnieren, so sollte es vor der Einbringung der Füllstoffe in die Epoxidharzzusammensetzung entfernt werden, beispielsweise durch Trocknen. Geringe Mengen an Wasser oder sonstigen Lösungsmitteln, welche die Epoxidharzzusammensetzung nicht oder nur unwesentlich beeinträchtigen, sind dagegen akzeptabel.

Das Lösungsmittel ist bevorzugt polar. Polare Lösungsmittel sind besser geeignet, Polycarboxylatether zu lösen. Das Lösungsmittel ist bevorzugt bei Raumtemperatur (23°C) flüssig.

Das Lösungsmittel ist bevorzugt amphiphil. Es wurde festgestellt, dass amphiphile Lösungsmittel mit einem polaren und einem hydrophoben Molekülbestandteil die Vermischung der beschichteten Füllstoffe mit einer Epoxidharzzusammensetzung in besonderem Maße unterstützen können.

Bevorzugt ist das Lösungsmittel ein Ester, Ether oder Alkohol. Das Lösungmittel kann dabei insbesondere ein Alkylalkohol, Alkylsäurealkylester oder Dialkylalkohol sein, wobei die Alkylreste jeweils verzweigt oder unverzweigt sein können und beispielsweise 1 bis 10, insbesondere 2 bis 6 C-Atome aufweisen können. Der Alkohol kann ein Di- oder Polyalkohol sein und der Ether kann ein Polyether sein, wie Polyethylenglykol, z. B. Triethylenglykol. Das Lösungsmittel kann auch ein Phenol sein, wie z.B. Nonylphenol. Besonders bevorzugt ist das Lösungsmittel Benzylalkohol, Propylencarbonat, Phenoxyethanol oder Glykolether. Es können auch Gemische der genannten Lösungsmittel eingesetzt werden.

In einer bevorzugten Ausführungsform ist das Lösungsmittel ein Hochsieder. Bevorzugt liegt der Siedepunkt oberhalb von 150°C, noch mehr bevorzugt oberhalb von 200°C. Dadurch wird erreicht, dass beschichtete Füllstoffe, die mit dem Lösungsmittel imprägniert wurden, bei der Lagerung und Verwendung relativ stabil sind. Insbesondere wird angenommen, dass das Lösungsmittel an der Oberfläche der Füllstoffe adsorbiert bleibt und sich nicht verflüchtigt oder in unerwünschter Weise abdiffundiert.

In einer bevorzugten Ausführungsform ist die Epoxidharzzusammensetzung wasserfrei. Dies bedeutet, dass sie kein Wasser oder allenfalls geringe Mengen Wasser enthält. Der Wasseranteil kann dabei beispielsweise kleiner 0,5 Gew.%, kleiner 0,1 Gew.% oder kleiner 0,05 Gew.%, bezogen auf das Gesamtgewicht der Zusammensetzung, sein. In einer weiteren Ausführungsform der Erfindung enthält die Epoxidharzzusammensetzung ein organisches Lösungsmittel, das bei Raumtemperatur (23°C) flüssig ist. Das Lösungsmittel kann beispielsweise auch dazu dienen, die Viskosität einzustellen oder die Durchmischung der Komponenten zu fördern bzw. zu gewährleisten. Der Anteil des organischen Lösungsmittels ist bevorzugt kleiner 10 Gew.% oder kleiner 2 Gew.%, bezogen auf das Gesamtgewicht der Zusammensetzung. Der Anteil kann beispielsweise 0,01 bis 50 Gew.%, 0,1 bis 20 Gew.% oder 0,2 bis 2 Gew.% betragen, bezogen auf das Gesamtgewicht der Zusammensetzung.

In einer bevorzugten Ausführungsform der Erfindung enthält die Epoxidharzzusammensetzung mindestens einen Härter. Dabei kann sich die Epoxidharzzusammensetzung bereits im Prozess des Aushärtens befinden. Alternativ tritt die Reaktion auch in Gegenwart des Härters noch nicht ein, da die Zusammensetzung noch nicht ausreichend aktiviert wurde. Solche Zusammensetzungen enthalten üblicherweise einen latenten Härter. Die Aktivierung von Epoxidharzzusammensetzung mit latenten Härtern kann durch zusätzliche Katalysatoren oder durch Erhöhung der Temperatur, beispielsweise auf Temperaturen oberhalb 80°C oder oberhalb 150°C, erfolgen.

Die erfindungsgemäße Epoxidharzzusammensetzung enthält mindestens ein Epoxidharz. Epoxidharze sind niedermolekulare oder polymere Verbindungen, die Epoxidgruppen aufweisen. Geeignete Epoxidharze zur Herstellung von Kunststoffen sind im Stand der Technik bekannt und kommerziell erhältlich. Sofern die Epoxidharze mit einer definierten genauen Anzahl von Epoxidgruppen pro Molekül ausgestattet sind, so weisen sie bevorzugt mindestens zwei Epoxidgruppen pro Molekül auf, beispielsweise zwei, drei, vier oder mehr Epoxidgruppen pro Molekül. Sofern die Epoxidharze Polymere mit variierender Anzahl von Epoxidgruppen im Molekül sind, muss das Epoxidharz im Mittel mehr als eine Epoxidgruppe pro Molekül aufweisen, um insgesamt eine Vernetzung zu erreichen. Das Epoxidharz enthält dann bevorzugt durchschnittlich mindestens zwei, mindestens drei oder mindestens vier Epoxidgruppen pro Molekül. Erfindungsgemäß können Gemische verschiedener Epoxidharze eingesetzt werden, beispielsweise von zwei, drei oder mehr verschiedenen Epoxidharzen.

Das Epoxidharz mit durchschnittlich mehr als einer Epoxidgruppe pro Molekül ist vorzugsweise ein Epoxid-Flüssigharz. Solche Flüssigharze enthalten noch nicht vernetzte frei bewegliche Polymermoleküle. Es ist bevorzugt keine Polymerdispersion aus bereits ausgehärteten Epoxidharzpartikeln.

Epoxidharze sind häufig Etherverbindungen, insbesondere Polyether. In einer bevorzugten Ausführungsform der Erfindung ist das Epoxidharz ein Glycidylether. Dieser weist bevorzugt zwei, drei, vier oder mehr Glycidylgruppen pro Molekül auf, oder bevorzugt durchschnittlich mindestens zwei, drei, vier oder mehr Glycidylgruppen pro Molekül. Bevorzugt sind Polymere, die endständige Glycidylgruppen aufweisen.

Epoxidharze sind oft Kondensate aus Glycidylverbindungen und Polyalkoholen, insbesondere Diolen. Bevorzugt sind Epoxidharze oder sind Kondensate bzw. Polymerisate, die unter Verwendung von Bisphenolen hergestellt wurden. Bisphenole sind eine Gruppe von chemischen Verbindungen, die zwei Hydroxyphenyl-Gruppen tragen. Als Reaktionspartner wird oft die Glycidylverbindung Epichlorhydrin eingesetzt.

Bevorzugte Epoxidharze weisen die Formel (X) auf

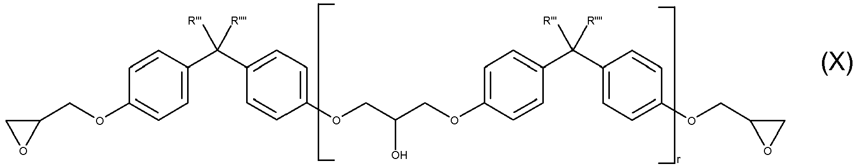

Dabei stehen die Substituenten R"' und R"" unabhängig voneinander entweder für H oder CH₃. Weiterhin steht der Index r für einen Wert von 0 bis 1. Bevorzugt steht r für einen Wert von kleiner als 0.2.

Es handelt sich somit vorzugsweise um Diglycidylether von Bisphenol-A (DGEBA), von Bisphenol-F sowie von Bisphenol-A/F. Die Bezeichnung ,A/F' verweist hierbei auf Aceton und Formaldehyd, die unter anderem als Edukte bei der Herstellung verwendet werden. Solche Flüssigharze sind beispielsweise als Araldite® GY250, Araldite® PY304, Araldite® GY282 (Huntsman) oder D.E.R.™ 331 oder D.E.R.™ 330 (Dow) oder Epikote 828 oder Epikote 862 (Hexion) erhältlich.

Weiterhin geeignet als Epoxidharz sind sogenannte Novolake. Diese weisen insbesondere die folgende Formel auf: 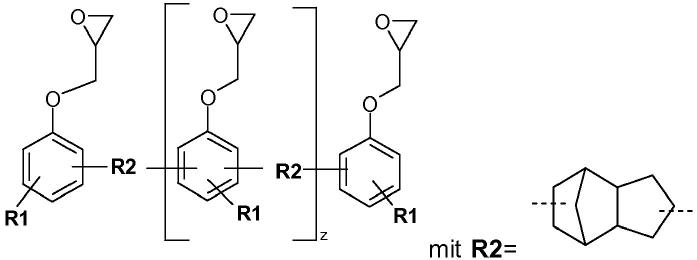 oder CH₂, **R1** = H oder Methyl und z = 0 bis 7.

Insbesondere handelt es sich hierbei um Phenol- oder Kresol-Novolake (**R2** = CH₂).

Solche Epoxidharze sind unter dem Handelsnamen EPN oder ECN sowie Tactix®556 von Huntsman oder unter der Produktereihe D.E.N.™ von Dow Chemical kommerziell erhältlich.

Die Epoxidharzzusammensetzung enthält bevorzugt zusätzlich mindestens einen Reaktivverdünner. Epoxidharz-Reaktivverdünner dienen dazu, die Reaktion zu steuern. Sie können niederviskose, aliphatische oder cycloaliphatische Epoxidverbindungen sein, wie Glycidylether. Die Reaktivverdünner sind bevorzugt monofunktionelle Glycidylether, wie C12-C14-Monoglycidiylether, difunktionelle Glycidylether, wie Butandioldiglycidylether oder Hexandioldiglycidylether, trifunktionelle Glycidylether, wie Trimethylolpropan-triglycidylether, aliphatischer Polyole mit ein, zwei, drei oder mehr funktionellen Glycidylether-Gruppen. Geeignet sind auch epoxidiertes Sojaöl oder Leinöl, Acetoacetatgruppen aufweisende Verbindungen, insbesondere acetoacetylierte Polyole, Butyrolakton, sowie weiterhin Isocyanate und Reaktivgruppen aufweisende Silikone.

Die erfindungsgemässe Zusammensetzung enthält zusätzlich mindestens einen Härter für Epoxidharze. Als Härter können übliche und bekannte Verbindungen eingesetzt werden, die mit den Epoxidgruppen reagieren. Dadurch wird das Epoxidharz vernetzt. Die Härter sind vorzugsweise basische Härter, insbesondere Aminverbindungen oder Amide. Bevorzugt enthalten die Härter mindestens zwei primäre oder sekundäre Aminogruppen pro Molekül. Aminverbindungen mit zwei oder mehr Aminogruppen pro Molekül werden nachfolgend als "Polyamine" bezeichnet. Sofern die Polyamine Polymere sind, enthalten sie im Durchschnitt mindestens zwei Aminogruppen pro Molekül. Erfindungsgemäß können Gemische verschiedener Härter eingesetzt werden, beispielsweise von zwei, drei oder mehr verschiedenen Härtern.

In einer bevorzugten Ausführungsform der Erfindung enthält der Härter mindestens ein Polyamin, das bevorzugt ausgewählt ist aus der Gruppe bestehend aus aliphatischen, cycloaliphatischen oder arylaliphatischen primären Diaminen, Triaminen und Tetraaminen, Polyaminen mit mehr als vier Amingruppen pro Molekül, sekundäre Aminogruppen aufweisende Polyaminen, Amin/Polyepoxid-Addukten, Poly(ethyleniminen), Polyamidoaminen, Polyetheraminen und Aminogruppen-terminierten Butadien/Acrylnitril-Copolymeren.

Polyamine sind auch Polyoxyalkylen-Diamine mit Molekulargewicht unter 500 g/mol (Jeffamine® D-230, Jeffamine D400, Jeffamine® EDR-148), 4,7,10-Trioxatridecan-1-13-diamin, 4,9-Dioxadodecan-1,12-diamine, Ethylendiamin, und/oder 3(4),8(9)-Bis-(aminomethyl)-tricyclo[5.2.1.0^{2,6}]decan (TCD-Diamin^{®}, hergestellt von Celanese Chemicals).

Weitere als Härter geeignete Polyamine sind beispielsweise:
- Aliphatische, cycloaliphatische oder arylaliphatische primäre Diamine, beispielsweise Ethylendiamin, 1,2-Propandiamin, 1,3-Propandiamin, 2-Methyl-1,2-propandiamin, 2,2-Dimethyl-1,3-propandiamin, 1,3-Butandiamin, 1,4-Butandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- und 1,4-Diaminocyclohexan, Bis-(4-aminocyclohexyl)-methan (H₁₂-MDA), Bis-(4-amino-3-methylcyclohexyl)-methan, Bis-(4-amino-3-ethylcyclohexyl)-methan, Bis-(4-amino-3,5-dimethylcyclohexyl)-methan, Bis-(4-amino-3-ethyl-5-methylcyclohexyl)-methan (M-MECA), 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 1,3-Cyclohexylenbis(methylamin), 2,5(2,6)-Bis-(aminomethyl)-bicyclo[2.2.1]heptan (NBDA), 3(4),8(9)-Bis-(aminomethyl)-tricyclo[5.2.1.0²,⁶]decan, 1,4-Diamino-2,2,6-trimethylcyclohexan (TMCDA), 1,8-Menthandiamin, 3,9-Bis-(3-aminopropyl)-2,4,8,10-tetraoxaspiro[5.5]undecan sowie 1,3- und 1,4-Xylylendiamin;
- Ethergruppen-haltige aliphatische primäre Diamine; beispielsweise Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin und höhere Oligomere dieser Diamine, Bis-(3-aminopropyl)-polytetrahydrofurane und andere Polytetrahydrofuran-diamine mit Molekulargewichten im Bereich von beispielsweise 350 bis 2000, sowie Polyoxyalkylen-Diamine. Letztere stellen typischerweise Produkte aus der Aminierung von Polyoxyalkylen-Diolen dar und sind beispielsweise erhältlich unter dem Namen Jeffamine^{®} (von Huntsman), unter dem Namen Polyetheramin (von BASF) oder unter dem Namen PC Amine^{®} (von Nitroil). Insbesondere geeignete Polyoxyalkylen-Diamine sind Jeffamine^{®} D-230, Jeffamine^{®} D-400, Jeffamine^{®} D-2000, Jeffamine^{®} XTJ-511, Jeffamine^{®} ED-600, Jeffamine^{®} ED-900, Jeffamine^{®} ED-2003, Jeffamine^{®} XTJ-568, Jeffamine^{®} XTJ-569, Jeffamine^{®} XTJ-523, Jeffamine^{®} XTJ-536, Jeffamine^{®} XTJ-542, Jeffamine^{®} XTJ-559, Jeffamine^{®} EDR-104, Jeffamine^{®} EDR-148, Jeffamine^{®} EDR-176; Polyetheramin D 230, Polyetheramin D 400 und Polyetheramin D 2000, PC Amine^{®} DA 250, PC Amine^{®} DA 400, PC Amine^{®} DA 650 und PC Amine^{®} DA 2000;
- sekundäre Aminogruppen aufweisende Polyamine; beispielsweise Diethylentriamin (DETA), N,N-Bis(2-aminoethyl)ethylendiamin, Dipropylentriamin (DPTA), Bis-hexamethylentriamin (BHMT), 3-(2-Aminoethyl)aminopropylamin, Triethylentetramin, Tetraethylenpentamin, N3-(3-Aminopentyl)-1,3-pentandiamin, N5-(3-Aminopropyl)-2-methyl-1,5-pentandiamin, N5-(3-Amino-1-ethylpropyl)-2-methyl-1,5-pentandiamin, N,N'-Dibutylethylendiamin; N,N'-Di-tert.butyl-ethylendiamin, N,N'-Diethyl-1,6-hexandiamin, 1-(1-Methylethyl-amino)-3-(1-methylethyl-aminomethyl)-3,5,5-trimethylcyclohexan (Jefflink^{®} 754 von Huntsman), N4-Cyclohexyl-2-methyl-N2-(2-methylpropyl)-2,4-pentandiamin, N,N'-Dialkyl-1,3-xylylendiamin, Bis-(4-(N-alkylamino)-cyclohexyl)-methan, 4,4'-Trimethylen-dipiperidin, N-alkylierte Polyetheramine, beispielsweise die Jeffamine^{®}-Typen SD-231, SD-401, SD-404 und SD-2001 (von Huntsman);
- Amin/Polyepoxid-Addukte; insbesondere Addukte aus den genannten Polyaminen mit Diepoxiden im Molverhältnis von mindestens 2/1, insbesondere im Molverhältnis von 2/1 bis 10/1;
- Polyamidoamine, welche Umsetzungsprodukte aus einer ein- oder mehrwertigen Carbonsäure, beziehungsweise deren Ester oder Anhydride, sind, insbesondere Umsetzungsprodukte aus einer Dimerfettsäure, und einem im stöchiometrischen Überschuss eingesetzten aliphatischen, cycloaliphatischen oder aromatischen Polyamin, insbesondere einem Polyalkylenamin wie beispielsweise DETA oder Triethylentetramin (TETA), darstellen, insbesondere die kommerziell erhältlichen Polyamidoamine Versamid^{®} 100, 125, 140 und 150 (von Cognis), Aradur^{®} 125, 140, 223, 250 und 848 (von Huntsman), Euretek^{®} 3607, Euretek^{®} 530 (von Huntsman), Beckopox^{®} EH 651, EH 654, EH 655, EH 661 und EH 663 (von Cytec);
- Polyethylenimine (PEI), dabei handelt es sich um verzweigte polymere Amine aus der Polymerisation von Ethylenimin. Ein geeignetes Polyethylenimin weist typischerweise ein mittleres Molekulargewicht im Bereich von 250 bis 25'000 g/mol auf und enthält tertiäre, sekundäre und primäre Aminogruppen. Polyethylenimine sind beispielsweise erhältlich unter dem Handelsnamen Lupasol^{®} (von BASF), zum Beispiel Lupasol^{®} WF, Lupasol^{®} FG, Lupasol^{®} G20 und Lupasol^{®} PR 8515.
- Mannichbasen; nämlich Amine mit weiteren funktionellen Gruppen, die durch die Mannich-Reaktion erhältlich sind, bei der eine Aminoalkylierung von CH-aziden Verbindungen mit einem Aldehyd und Ammoniak beziehungsweise einem primären oder sekundären Amin stattfindet.

Als Härter können auch saure Härter eingesetzt werden, insbesondere Säureanhydride. Es können auch katalytisch wirkende Härter eingesetzt werden, wie Fluoride, beispielsweise Bortrifluorid.

Die erfindungsgemäße Epoxidharzzusammensetzung enthält anorganische Füllstoffe. Die anorganischen Füllstoffe sind bevorzugt mineralische Füllstoffe. Die anorganischen Füllstoffe können natürlichen Ursprungs oder künstlich hergestellt sein. Geeignete Füllstoffe sind nach dem Stand der Technik bekannt und kommerziell erhältlich. Sie dienen insbesondere zur Erhöhung der Stabilität des Epoxidharzes und zur Einsparung von Epoxidharz. Sie können auch weitere Funktionen erfüllen, beispielsweise als Pigmente zum Färben, zur Steuerung der Rheologie oder als Brandschutzmittel. Die Füllstoffe können synthetische Füllstoffe oder natürlich vorkommende Mineralien sein. Sie sind bevorzugt Sauerstoff-haltige Verbindungen. Üblicherweise werden Oxide, Mischoxide oder Salze von Metallen und Halbmetallen, insbesondere Silicium, eingesetzt. Die Füllstoffe können auch metallisch sein, wie Aluminium, insbesondere in Form von Aluminiumgrieß. In einer bevorzugten Ausführungsform sind die Füllstoffe nicht Metalle.

Die anorganischen Füllstoffe sind bevorzugt ausgewählt aus Siliciumverbindungen, wie Siliciumdioxid, Silicaten und gefällten und pyrogenen Kieselsäuren; Metalloxiden, wie Titandioxid, Eisenoxid, Alumina, Zinkoxid und Magnesiumoxid; Metallcarbonaten, wie Calciumcarbonat oder Dolomit; Metallsulfaten, wie Calciumsulfat (Gips) und Bariumsulfat; Metallhydroxiden, wie Aluminiumhydroxid, Nitriden oder Carbiden, Tonmineralen, wie Kaolin, Flugaschen, Zement, Gläsern und keramischen Werkstoffen.

Das Siliciumdioxid kann beispielsweise Quarz sein, z. B. in Form von Quarzmehl oder Quarzsand. Das Silikat kann beispielsweise Talk, Mica oder Wollastonit sein. Das Sulfat kann beispielsweise Baryt (Schwerspat, Bariumsulfat) sein. Es können auch Gemische verschiedener Füllstoffen und/oder verschiedene Fraktionen eines Füllstoffs mit unterschiedlichen Größen eingesetzt werden. Die Füllstoffe können übliche Formen aufweisen. Insbesondere können Pulver eingesetzt werden, aber auch Hohlkugeln (zum Beispiel aus Glas oder Keramik) oder Fasern.

Die Füllstoffe sind mit den Polycarboxylatethern beschichtet. Bevorzugt sind die Füllstoffe abgesehen davon nicht beschichtet und insbesondere nicht mit einer kovalent gebundenen Oberflächenbeschichtung ausgestattet. Erfindungsgemäß wurde gefunden, dass einfache nicht oberflächenbehandelte anorganische Füllstoffe in Gegenwart von gelösten Polycarboxylatethern als Dispergiermittel effizient in Epoxidharzzusammensetzungen eingearbeitet und verarbeitet werden können. Es ist daher erfindungsgemäß nicht erforderlich, dass die Füllstoffe zusätzlich kovalent oberflächenbeschichtet sind, beispielsweise vorab hydrophobiert wurden. Ungeachtet dessen können erfindungsgemäß jedoch auch vorbehandelte bzw. vorab beschichtete oder oberflächenmodifizierte Füllstoffe eingesetzt werden.

Die Größe der Füllstoffe und die Korngrößenverteilung werden im Hinblick auf die gewünschten Eigenschaften der Epoxidharzzusammensetzung und des ausgehärteten Epoxidharzes ausgewählt. Die erfindungsgemäß eingesetzten Füllstoffe können daher beliebige Korngrößen aufweisen, beispielsweise von 1 µm bis 1 cm, insbesondere zwischen 10 µm und 6 mm. Die mittlere Korngröße der Füllstoffe kann beispielsweise zwischen 10 µm und 3 mm liegen. Die Korngröße und die Korngrößenverteilung von Füllstoffen kann durch Siebanalyse oder durch mikroskopische Untersuchung ermittelt werden.

In einer besonders bevorzugten Ausführungsform sind die anorganischen Füllstoffe Feinstfüllstoffe, oder die Füllstoffe weisen einen Anteil Feinstfüllstoffe auf, die bevorzugt bei der Herstellung als Feinstfüllstoff-Fraktion zugegeben wird. Es wurde erfindungsgemäß gefunden, dass Polycarboxylatether in Gegenwart von Feinstfüllstoffen besonders effizient als Dispergiermittel in Epoxidharzzusammensetzungen wirken. Feinstfüllstoffe sind insbesondere Füllstoffe mit absoluten Korngrößen kleiner 60 µm. Feinstfüllstoffe sind insbesondere Füllstoffe, die eine mittlere Korngröße von kleiner als 50 µm, kleiner als 30 µm oder kleiner als 10 µm aufweisen. Die Korngröße der Feinstfüllstoffe kann dabei mindestens 0,5 µm, mindestens 1 µm oder mindestens 2 µm sein. Bevorzugt weisen die Feinstfüllstoffe Korngrößen zwischen 0,5 und 60 µm, insbesondere zwischen 1 und 30 µm auf. In einer bevorzugten Ausführungsform der Erfindung wird ein Gemisch verschiedener Füllstoffe und/oder Fraktionen desselben Füllstoffs eingesetzt, die unterschiedliche Korngrößen aufweisen. Beispielsweise kann ein Gemisch von Feinstfüllstoffen mit absoluten Korngrößen kleiner 60 µm und gröberen Füllstoffen mit absoluten Korngrößen von 60 µm bis 1 cm eingesetzt werden. Bevorzugt sind die Feinstfüllstoffe mit dem Polycarboxylatether beschichtet. Gegebenenfalls können dabei auch weitere Fraktionen anorganischer Füllstoffe beschichtet sein, die nicht Feinstfüllstoffe sind. Es können jedoch auch Anteile von Feinstfüllstoffen oder gröberen Füllstoffen enthalten sein, die nicht beschichtet sind.

In einer bevorzugten Ausführungsform der Erfindung umfassen die anorganischen Füllstoffe einen Anteil von Feinstfüllstoffen, der bevorzugt beschichtet ist, und der mindestens 5 Gew.%, bevorzugt mindestens 10 Gew.%, mindestens 50 Gew.%, mindestens 80 Gew.% oder mindestens 95 Gew.% ist, bezogen auf das Gesamtgewicht aller anorganischen Füllstoffe. Dabei kann die Epoxidharzzusammensetzung auch ausschließlich Feinstfüllstoffe als Füllstoffe enthalten.

In einer Ausführungsform der Erfindung ist nur ein Teil der Füllstoffe mit Polycarboxylatethern beschichtet, während die übrigen Füllstoffe nicht beschichtet sind. Bevorzugt ist eine Füllstofffraktion beschichtet, deren mittlere Korngröße kleiner ist als die der nicht beschichteten Füllstoffe. Bevorzugt ist dabei nur eine Füllstoff-Fraktion mit absoluten Korngrößen kleiner 100 µm, kleiner 60 µm oder kleiner 20 µm beschichtet. Dabei sind beispielsweise zwischen 5 und 100 Gew.%, bevorzugt zwischen 5 und 90 Gew.% oder zwischen 5 und 60 Gew.%, insbesondere zwischen 10 und 60 Gew.% oder zwischen 10 und 30 Gew.% beschichtet, bezogen auf das Gesamtgewicht aller anorganischer Füllstoffe in der Epoxidharzzusammensetzung. Dadurch kann insgesamt Polycarboxylatether eingespart werden, wobei die vorteilhaften Eigenschaften zumindest anteilig erreicht werden.

Die erfindungsgemäße Epoxidharzzusammensetzung enthält mindestens einen Polycarboxylatether. Geeignete Polycarboxylatether werden im Stand der Technik als Dispergiermittel für hydraulisch abbindende Zusammensetzungen, insbesondere Gips und Zement, eingesetzt. Polycarboxylatether sind Kammpolymere mit einer Hauptkette, die Carboxygruppen aufweist, und Seitenketten, die unter anderem Ethergruppen aufweisen. Die Polycarboxylatether weisen üblicherweise Seitenketten mit Polyethergruppen auf, insbesondere auf der Basis von Polyethylenglykol und/oder Polypropylenglykol. Erfindungsgemäß steht der Begriff "Polycarboxylatether" für Verbindungen, die Ethergruppen aufweisen, wobei sie weitere Gruppen, insbesondere Ester- und Amidgruppen, aufweisen können. Die erfindungsgemäßen Polycarboxylatether werden daher im Stand der Technik auch als "Polycarboxylatester" bezeichnet. Erfindungsgemäß können Gemische verschiedener Polycarboxylatether eingesetzt werden.

Bevorzugt weist der Polycarboxylatether über Ester-, Amid- und/oder Ethergruppen an eine Hauptkette angebundene Seitenketten auf. Die Hauptkette weist mindestens eine Säureeinheit A oder ein Salz davon auf, die bevorzugt eine Acrylsäureeinheit und/oder eine Methacrylsäureeinheit ist. Der Polycarboxylatether wird bevorzugt durch Veresterung und/oder Amidierung einer Polycarbonsäure oder eines Salzes oder Anhydrids davon hergestellt.

Eine Säureeinheit A wird üblicherweise in das Polymer eingebracht, indem die Polymerisation in Gegenwart eines entsprechenden Säuremonomers, das üblicherweise ungesättigt ist, oder eines Salzes oder Anhydrids davon durchgeführt wird. Als Säure-Monomere sind dabei insbesondere α-ungesättigt Mono- oder Dicarbonsäuren geeignet, insbesondere Acrylsäure, Methacrylsäure, Maleinsäureanhydrid, Maleinsäure, Itaconsäure, Crotonsäure oder Fumarsäure.

In einer bevorzugten Ausführungsform der Erfindung umfasst der Polycarboxylatether:
a) mindestens eine Säureeinheit A der Formel (I): 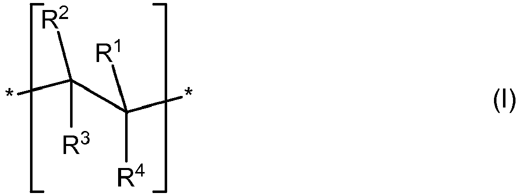
   wobei jedes R¹, R² und R³ unabhängig von den anderen für H, -COOM, -CH₂COOM oder eine Alkylgruppe mit 1 bis 5 Kohlenstoffatomen stehen,
   jedes R⁴ unabhängig von den anderen für -COOM, -CH₂COOM, -S0₂-OM, -O-PO(OM)₂ und/oder -PO(OM)₂ steht;
   oder wobei R³ mit R⁴ einen Ring bildet zu -CO-O-CO-;
   wobei M für H, ein Alkalimetall, ein Erdalkalimetall, Ammonium, ein Ammoniumkation, eine organische Ammoniumverbindung oder Mischungen davon steht;
   mit der Massgabe, dass insgesamt ein einziger oder zwei der Reste R¹, R², R³ und R⁴ Säuregruppen sind, wobei die Säureeinheit **A** bevorzugt eine Acrylsäureeinheit oder ein Salz davon und/oder eine Methacrylsäureeinheit oder ein Salz davon ist; und
a) mindestens einer Struktureinheit **B** der Formel (II); 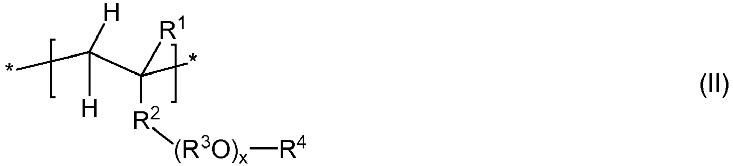 wobei
   - R¹: unabhängig voneinander für H oder CH₃ steht;
   - R²: unabhängig voneinander für ein Estergruppe -CO-O- oder für eine Amidgruppe -CO-NH- steht;
   - R³: unabhängig voneinander für eine C₂ - C₆ Alkylengruppe, insbesondere für eine Ethylen- oder Propylengruppe steht,
   - R⁴: unabhängig voneinander für H, einen C₁ - C₁₂ Alkyl- oder Cycloalkylrest, einen C₇ - C₂₀ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, steht, und
   - x: unabhängig voneinander ein Wert zwischen 3 und 250, vorzugsweise zwischen 5 und 150 ist.

Die Hauptkette des Polycarboxylatethers ist also ein lineares Copolymer, wobei die Struktureinheit **B** Bestandteil des linearen Copolymers ist.

Die mindestens eine Säureeinheit **A,** insbesondere die mindestens eine Acrylsäureeinheit und/oder die mindestens eine Methacrylsäureeinheit können teilweise oder vollständig neutralisiert sein. Die Säureeinheit kann als freie Säure oder auch als Salz oder Teilsalz oder Anhydrid vorliegen, wobei der Term "Salz" hier und im Folgenden neben den klassischen Salzen, wie sie durch Neutralisation mit einer Base erhalten werden, auch komplexchemische Verbindungen zwischen Metallionen und den Carboxylat- oder CarboxylGruppen als Liganden umfasst. Die klassischen Salze werden insbesondere durch Neutralisation mit Natriumhydroxid, Calciumhydroxid, Magnesiumhydroxid, Ammoniumhydroxid oder einem Amin erhalten.

Die Struktureinheit **B** der Formel (I) kann je nach Auswahl des Restes R² ein Ester oder ein Amid sein. In einem Polycarboxylatether können dabei sowohl Ester- als auch Amidgruppen enthalten sein.

In einer bevorzugten Ausführungsform der Erfindung weist der Polycarboxylatether mindestens eine Struktureinheit **B** der Formel (I) mit R¹ gleich H und mindestens eine Struktureinheit **B** der Formel (I) mit R¹ gleich CH₃ auf, wobei R² bevorzugt eine Estergruppe ist. Das heisst, dass bei einem bevorzugten Polycarboxylatether ein Teil der Struktureinheiten **B** Polyoxyalkylenacrylateinheiten und ein anderer Teil der Struktureinheiten **B** Polyoxyalkylenmethacrylateinheiten darstellen.

In einer bevorzugten Ausführungsform steht -(R³O)ₓ- für eine C₂ bis C₄ Polyoxyalkylengruppe, insbesondere für eine Polyoxyethylengruppe oder eine Polyoxypropylengruppe oder Mischungen von Oxyethylen- und Oxypropyleneinheiten in beliebiger Sequenz, beispielsweise zufällig, alternierend oder blockweise.

R⁴ ist vorzugsweise nicht H und besonders bevorzugt ein Methylrest.

In einer bevorzugten Ausführungsform der Erfindung weist der Polycarboxylatether an der Gesamtzahl aller (R³O)ₓ-Einheiten einen Anteil von Ethylenoxideinheiten von mindestens 30 Mol-%, vorzugsweise 50 bis 100 Mol-%, insbesondere 80 bis 100 Mol.-% auf. Besonders bevorzugt sind in dem Polycarboxylatether - Ethylenoxid- und Propylenoxideinheiten vorhanden.

In einer bevorzugten Ausführungsform der Erfindung weist der Polycarboxylatether mindestens eine weitere Struktureinheit **C** auf, die von den Struktureinheiten **A** und **B** verschieden ist, und die ausgewählt ist aus einer Ether-, Ester, Amid- oder Imideinheit, einer Säureeinheit, ausgewählt aus Carbonsäure, Sulfonsäure, Phosphonsäure, Phosphorsäureester, Carbonylamidomethylpropansulfonsäure und deren Salzen, oder einer Polyoxyalkylenoxycarbonyl-, Polyoxyalkylenaminocarbonyl-, Polyoxyalkylenoxyalkyl-, Polyoxyalkylenoxy-, Hydroxyethyloxycarbonyl-, Acetoxy-, Phenyl- oder N-Pyrrolidonylgruppe. Vorzugsweise umfasst die weitere Struktureinheit **C** Polyoxyalkylengruppen, vorzugsweise Polyoxyethylengruppen, Polyoxypropylengruppen oder Mischungen davon. Beispielsweise kann die Struktureinheit **C** eine Estereinheit sein, welche durch Umsetzung einer Mono- oder Dicarbonsäure mit einem Alkylalkohol, insbesondere einem C₆-C₂₀ Alkylalkohol hergestellt wird.

Der Polycarboxylatether kann eine Kombination von verschiedenen Struktureinheiten der jeweiligen Struktureinheiten von **A, B** und gegebenenfalls **C** aufweisen. Beispielsweise können mehrere Säureeinheiten **A** gemischt im Polycarboxylatether vorkommen, welche gar nicht oder ganz neutralisiert sind. Alternativ können mehrere unterschiedliche Ester- und/oder Amideinheiten **B** gemischt im Polycarboxylatether vorkommen, so zum Beispiel mehrere Estereinheiten **B** mit verschiedenen Substituenten R³. Bevorzugt ist beispielsweise die gemeinsame Verwendung von Polyoxyalkylenen, insbesondere von Polyoxyethylen mit Polyoxypropylen, oder die gemeinsame Verwendung von Polyoxyalkylenen, insbesondere von Polyoxyethylen, mit unterschiedlichem Molekulargewicht.

In einer bevorzugten Ausführungsform der Erfindung umfasst der Polycarboxylatether
a) 5 bis 95 Mol-%, vorzugsweise 10 bis 80 Mol-%, besonders bevorzugt 20 bis 60 Mol.-% Säureeinheiten **A,** insbesondere Acrylsäureeinheiten und/oder Methacrylsäureeinheiten,
b) 5 bis 50 Mol-%, vorzugsweise 10 bis 40 Mol-% der Struktureinheit **B,** und
c) 0 bis 30 Mol-%, vorzugsweise 0 bis 15, insbesondere 0 bis 5 Mol-% der Struktureinheit **C**,
   jeweils bezogen auf die Gesamtzahl aller monomeren Einheiten in der Hauptkette des Polycarboxylatethers.

Die Abfolge der einzelnen Struktureinheiten **A, B,** und **C** im Polycarboxylatether kann alternierend, statistisch, blockweise oder zufällig sein.

Der Polycarboxylatether weist vorzugsweise ein mittleres Molekulargewicht Mₙ im Bereich von 1000 bis 100'000 g/mol, vorzugsweise 2000 bis 70'000 g/mol, besonders bevorzugt 5000 bis 50'000 g/mol auf.

Geeignete Polycarboxylatether sind kommerziell erhältlich, beispielsweise von der Sika AG, CH, unter der Markenbezeichnung Sika Visocrete.

Die Polycarboxylatether werden bevorzugt nach der polymeranalogen Reaktion hergestellt. Die polymeranaloge Umsetzung weist den Vorteil auf, dass aus Polycarbonsäuren durch Variation der Menge, der Art und dem Verhältnis von Alkoholen und Aminen Polycarboxylatether mit sehr unterschiedlichen und vorteilhaften Strukturen und Eigenschaften erhalten werden können. Überraschenderweise wurde festgestellt, dass bei dem erfindungsgemäßen Einsatz von Polycarboxylatethern, die durch polymeranaloge Reaktion hergestellt wurden, besonders vorteilhafte Eigenschaften erzielt werden, wobei insbesondere die Verarbeitbarkeit von Zementzusammensetzungen über längere Zeiträume gewährleistet wird. Die unterschiedlichen Eigenschaften werden wahrscheinlich durch unterschiedliche Verteilungen der Seitenketten im Polymer erhalten.

Polymeranaloge Umsetzungen sind an sich bekannt und werden beispielsweise in WO97/35814A1, WO95/09821A2, DE 100 15 135A1, EP 1138697A1, EP1348729A1 sowie WO2005/090416A1 beschrieben. Details zur polymeranalogen Umsetzung werden beispielsweise offenbart in EP 1 138 697 B1 auf Seite 7 Zeile 20 bis Seite 8 Zeile 50, sowie in den darin enthaltenen Beispielen, oder in EP 1 061 089 B1 auf Seite 4, Zeile 54 bis Seite 5 Zeile 38 sowie in den Beispielen.

Das erfindungsgemäß eingesetzte Polymer kann auch durch eine radikalische Polymerisationsreaktion hergestellt sein, bei der das Copolymer aus entsprechenden ethylenisch ungesättigten Säure-, Ester- und Amidmonomeren in Gegenwart eines Radikalbildners erhalten wird. Der Weg über die radikalische Polymerisation ist die im Stand der Technik am häufigsten verwendete Methode.

Je nach Reaktionsführung kann der Polycarboxylatether als Reaktionsprodukt eingesetzt werden, der zusätzlich zum Polycarboxylatether freie Verbindungen der Ausgangsstoffe, insbesondere freie Monohydroxyverbindungen wie beispielsweise einseitig Endgruppen-verschlossenes Polyoxyalkylen, insbesondere freies Methoxy-Polyoxyethylen, enthalten.

In einer bevorzugten Ausführungsform der Erfindung wird die erfindungsgemäße Epoxidharzzusammensetzung als Mehrkomponentensystem bereitgestellt. Aushärtbare Epoxidharzzusammensetzungen werden dem Anwender regelmäßig als Mehrkomponentensysteme zur Verfügung gestellt. Dabei sind das Epoxidharz und der Härter regelmäßig in verschiedenen Komponenten enthalten, so dass die Aushärtungsreaktion erst stattfinden kann, wenn der Anwender die Komponenten vermischt. Die beschichteten Füllstoffe können Bestandteil einer oder beider dieser Komponenten oder Bestandteil einer zusätzlichen (Füllstoff-)Komponente sein. Gegenstand der Erfindung ist auch ein Mehrkomponentensystem zur Herstellung einer erfindungsgemäßen aushärtbaren Epoxidharzzusammensetzung, umfassend mindestens
eine Komponente K1, enthaltend das mindestens eine Epoxidharz, und
gegebenenfalls eine Härter-Komponente K2, enthaltend den mindestens einen Härter oder einen Katalysator,
wobei mindestens ein Härter in der Komponente K1 oder K2 enthalten ist,
wobei der mindestens eine mit dem Polycarboxylatether beschichtete anorganische Füllstoff in der Komponente K1, K2 und/oder einer weiteren Komponente K3 enthalten ist.

Wenn ein Härter in der Komponente K1 enthalten ist, ist dieser bevorzugt ein latenter Härter. Latente Härter entfalten erst ihre Wirkung, nachdem sie aktiviert werden, insbesondere durch Katalysatoren oder erhöhte Temperatur. Wenn in Komponente K1 ein latenter Härter enthalten ist, so kann in Komponente K2 ein Katalysator zur Aktivierung des Härters eingesetzt werden. Wenn ein nicht latenter Härter eingesetzt wird, so ist dieser nicht in Komponente K1, sondern in einer gesonderten Komponente, bevorzugt einer Härter-Komponente K2 enthalten.

Der anorganische Füllstoff und der mindestens eine Polycarboxylatether sind in derselben Komponente K3, K2 oder K1 enthalten. Besonders bevorzugt ist ein Mehrkomponentensystem, bei dem die anorganischen Füllstoffe und die Polycarboxylatether in einer zusätzlichen Komponente K3 enthalten sind.

Bevorzugt ist das Mehrkomponentensystem ein Dreikomponentensystem. Erfindungsgemäß wurde gefunden, dass bei einem solchen Mehrkomponentensystem mit mindestens drei Komponenten eine besonders gute Haltbarkeit der einzelnen Komponenten über längere Zeiträume gewährleistet ist. Insbesondere wenn die Komponente K1 nicht wässrig ist, ist es bevorzugt, dass die Polycarboxylatether nicht in dieser Komponente K1 enthalten sind, da sie in den eher hydrophoben Epoxidharzen oft unzureichend löslich sind. Es ist insgesamt bevorzugt, dass die Polycarboxylatether in der gesonderten Füllstoff-Komponente K3 enthalten sind.

In einer bevorzugten Ausführungsform der Erfindung umfasst das erfindungsgemäße Mehrkomponentensystem eine Komponente K3, die den Füllstoff, den Polycarboxylatether und ein Lösungsmittel enthält. Dabei ist der Füllstoff mit dem Polycarboxylatether beschichtet, insbesondere durch Imprägnieren mit einer Lösung oder Suspension, die den Polycarboxylatether und das Lösungsmittel enthält.

Die erfindungsgemäße Epoxidharzzusammensetzung und das Mehrkomponentensystem können weitere übliche Zusatzstoffe enthalten. Im technischen Gebiet der Epoxidharze ist eine Vielzahl von Zusatzstoffen bekannt, welche die Eigenschaften der aushärtbaren Zusammensetzungen oder der ausgehärteten Epoxidharze beeinflussen. Der Anteil an Zusatzstoffen in der Epoxidharzzusammensetzung, der neben Epoxidharzen, Härtern, Polycarboxylatethern und anorganischen Füllstoffen enthalten ist, kann - einschließlich Lösungsmittel - beispielsweise bis zu 50 Gew.%, bis zu 20 Gew.%, bis zu 5 Gew.% oder bis zu 2 Gew.% betragen. In einer bevorzugten Ausführungsform der Erfindung ist mindestens ein weiterer Zusatzstoff enthalten, ausgewählt aus Reaktivverdünnern, Weichmachern, Lösungsmitteln, Filmbildehilfsmittel, Extendern, Katalysatoren, Beschleunigern, Polymeren, Rheologie-Modifizierern, Haftverbesserern, Stabilisatoren, Entschäumern, Entlüftern, flammhemmende Substanzen, oberflächenaktive Substanzen, Bioziden, organische Farbstoffen und Pigmenten und weiteren Dispergiermitteln. Beispielsweise sind diese:
- Lösungsmittel, Filmbildehilfsmittel oder Extender, wie aromatische Lösungsmittel, wie Toluol, Xylol oder Benzylalkohol, Methylethylketon, 2-Ethoxyethanol, 2-Ethoxy-ethylacetat, aliphatische Alkohole, wie , Ethanol, Propanol oder Butanol, Benzylalkohol, Phenole, wie Nonylphenol oder Nonylphenolethoxylate, Ether oder Polyether, wie Ethylenglykol, Diethylenglykolbutylether, Dipropylenglykolbutylether, Ethylenglykolbutylether, Ethylenglykolphenylether, N-Methylpyrrolidon, Propylenglykolbutylether, Propylenglykolphenylether, Diphenylmethan, Diisopropylnaphthalin, Erdölfraktionen wie zum Beispiel Solvesso-Typen (von Exxon), wie Solvesso 200, aromatische Kohlenwasserstoffharze, insbesondere Phenolgruppenhaltige Typen, Sebacate, Phthalate, Erdölfraktionen, Naphtha, aromatisches Naphtha, organische Phosphor- und Sulfonsäureester und Sulfonamide;
- Polymere mit funktionellen Gruppen, wie beispielsweise Polyamide, Polysulfide, Polyvinylformal (PVF), Polyvinylbutyral (PVB), Polyurethane (PUR), Polymere mit Carboxylgruppen, Polyamide, Butadien-Acrylnitril-Copolymere, Styrol-Acrylnitril-Copolymere, Butadien-Styrol-Copolymere, Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere chlorsulfonierte Polyethylene und Fluor-haltige Polymere, Sulfonamid-modifizierte Melamine und gereinigte Montan-Wachse;
- organische Farbstoffe;
- Beschleuniger, welche die Reaktion zwischen Aminogruppen und Epoxidgruppen beschleunigen, beispielsweise Säuren oder zu Säuren hydrolysierbare Verbindungen, beispielsweise organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren wie beispielsweise Phosphorsäure, oder Mischungen der vorgenannten Säuren und Säureester; weiterhin tertiäre Amine wie 1,4-Diazabicyclo[2.2.2]octan, Benzyldimethylamin, α-Methylbenzyldimethylamin, Triethanolamin, Dimethyl-aminopropylamin, Salze solcher tertiärer Amine, quaternäre Ammoniumsalze, wie beispielsweise Benzyltrimethylammoniumchlorid, Phenole, insbesondere Bisphenole, Phenol-Harze und Mannich-Basen wie beispielsweise 2-(Dimethylaminomethyl)-phenol und 2,4,6-Tris-(dimethylaminomethyl)-phenol, Phosphite wie beispielsweise Di- und Triphenylphosphite, sowie Mercaptogruppen aufweisende Verbindungen, wie sie bereits vorgängig genannt wurden; Katalysatoren;
- Rheologie-Modifizierer, wie insbesondere Verdickungsmittel, zum Beispiel Schichtsilikate wie Bentonite, Derivate von Rizinusöl, hydriertes Rizinusöl, Polyamide, Polyurethane, Harnstoffverbindungen, pyrogene Kieselsäuren, Celluloseether und hydrophob modifizierte Polyoxyethylene;
- Haftverbesserer, beispielsweise Organoalkoxysilane wie 3-Glycidoxypropyltrimethoxysilan, 3-Aminopropyltrimethoxysilan, N-(2-Aminoethyl)-3-amino-propyl-trimethoxysilan, N-(2-Aminoethyl)-N'-[3-(trimethoxysilyl)propyl]ethylen-diamin, 3-Ureidopropyltrimethoxysilan, 3-Chloropropyltrimethoxysilan, Vinyltrimethoxysilan, oder die entsprechenden Organosilane mit Ethoxygruppen oder (Poly)etheroxygruppen anstelle der Methoxygruppen;
- Stabilisatoren gegen Oxidation, Wärme, Licht und UV-Strahlung;
- flammhemmende Substanzen, insbesondere Verbindungen wie Aluminiumhydroxid (Al(OH)₃; auch ATH für "Aluminiumtrihydrat" genannt), Magnesiumhydroxid (Mg(OH)₂; auch MDH für "Magnesiumdihydrat" genannt), Ammoniumsulfat ((NH₄)₂SO₄), Borsäure (B(OH)₃), Zinkborat, Melaminborat und Melamincyanurat; Phosphor-haltige Verbindungen wie Ammoniumphosphat ((NH₄)₃PO₄), Ammoniumpolyphosphat, Melaminphosphat, Melaminpyrophosphat, Triphenylphosphat, Diphenylkresylphosphat, Trikresylphosphat, Triethylphosphat, Tris-(2-ethylhexyl)phosphat, Trioctylphosphat, Mono-, Bis- und Tris-(isopropylphenyl)phosphat, Resorcinol-bis(diphenylphosphat), Resorcinol-diphosphat-Oligomer, Tetraphenyl-resorcinol-diphosphit, Ethylendiamin-diphosphat und Bisphenol-A-bis(diphenylphosphat); Halogen-haltige Verbindungen wie Chloroalkylphosphate, insbesondere Tris-(chloroethyl)phosphat, Tris-(chloropropyl)phosphat und Tris-(dichloro-isopropyl)phosphat, polybromierte Diphenylether, insbesondere Decabromdiphenylether, polybromiertes Diphenyloxid, Tris-[3-Bromo-2,2-bis(bromo-methyl)propyl]phosphat, Tetrabromo-Bisphenol-A, Bis-(2,3-dibromopropyl-ether) von Bisphenol A, bromierte Epoxidharze, Ethylen-bis(tetrabromo-phtalimid), Ethylen-bis(dibromo-norbornandicarboximid), 1,2-Bis-(tribromo-phenoxy)ethan, Tris-(2,3-dibromopropyl)isocyanurat, Tribromophenol, Hexabromocyclododecan, Bis-(hexachlorocyclopentadieno)cyclooctan und Chlorparaffine;
- oberflächenaktive Substanzen wie beispielsweise Netzmittel, Verlaufsmittel, Entlüftungsmittel oder Entschäumer;
- weitere Füllstoffe, wie organische Füllstoffe, wie organische Polymere, z. B. als Pulver oder Hohlkugeln, wie PVC-Pulver oder PVC-Hohlkugeln; Kunststofffasern oder Naturfasern, oder weitere anorganische Füllstoffe, die nicht mit Polycarboxylatethern beschichtet sind, zum Beispiel Flugaschen, Ruß, Graphit, Titanate, Metall-Pulver, wie Aluminium, Kupfer, Eisen, Silber oder Stahl;
- Biozide wie beispielsweise Algizide, Fungizide oder das Pilzwachstum hemmende Substanzen;
- weitere, von Polycarboxylatethern verschiedene Dispergiermittel und Verflüssiger, wie Tenside, Phosphatester mit langkettigen Polyetherkomponenten, Ligninsulfonate, Melamin-Formaldehyd-Sulfonate oder Naphthalin-Formaldehyd-Sulfonate. Die gleichmäßige Verteilung der Füllstoffe in der Epoxidzusammensetzung kann im Einzelfall noch verbessert werden, wenn weitere Dispergiermittel enthalten sind.

Der Polycarboxylatether wird vorzugsweise in einer Menge von 0,01 bis 2 Gew.%, bevorzugt 0,02 bis 1 Gew.%, noch mehr bevorzugt 0,1 bis 0,5 Gew.% Polycarboxylatether, bezogen auf das Gewicht des Füllstoffs, eingesetzt. Der Polycarboxylatether kann getrennt oder als Dispergiermittel vorgemischt in fester oder flüssiger Form zu dem Füllstoff gegeben werden. Der Polycarboxylatether wird dabei bevorzugt in gelöster Form oder als Suspension eingesetzt.

Der Anteil des Polycarboxylatethers an der Epoxidharzzusammensetzung ist vorzugsweise kleiner 2 Gew.%, bevorzugt kleiner 1 Gew.%, noch mehr bevorzugt kleiner 0,5 Gew.%, bezogen auf das Gewicht der Epoxidharzzusammensetzung. Der Polycarboxylatether wird vorzugsweise in einer Menge von 0,01 bis 2 Gew.%, bevorzugt 0,01 bis 1 Gew.%, noch mehr bevorzugt 0,05 bis 0,5 Gew.% Polycarboxylatether, bezogen auf das Gewicht der Epoxidharzzusammensetzung, eingesetzt.

In einer bevorzugten Ausführungsform der Erfindung umfasst das Mehrkomponentensystem mindestens
eine Komponente K1, enthaltend mindestens ein Epoxidharz,
eine Komponente K2, enthaltend mindestens einen Härter, und
eine feste Komponente K3, enthaltend
(a) 93 bis 99,97 Gew.%, bevorzugt 96 bis 99,88 Gew.%, noch mehr bevorzugt 98 bis 99,7 Gew.% anorganische Füllstoffe,
(b) 0,01 bis 2 Gew.%, bevorzugt 0,02 bis 1 Gew.%, noch mehr bevorzugt 0,1 bis 0,5 Gew.% Polycarboxylatether, und
(c) 0,02 bis 5 Gew.% bevorzugt 0,1 bis 2,5 Gew.%, noch mehr bevorzugt 0,2 bis 1,5 Gew.% Lösungsmittel.

Die Epoxidharz-haltige Komponente K1 kann zusätzlich kompatible Additive enthalten, beispielsweise Reaktivverdünner, Lösungsmittel und/oder Weichmacher. Solche Zusätze werden üblicherweise eingesetzt, um die Viskosität zu erniedrigen und somit die Verarbeitbarkeit zu verbessern.

Die Härter-haltige Komponente K2 kann erfindungsgemäß ausschließlich aus einem oder einer Mischung verschiedener Härter bestehen. Die Komponente K2 kann zusätzlich weitere geeignete und kompatible Additive, wie Katalysatoren oder Weichmacher enthalten. Dies ist insbesondere vorteilhaft, wenn der Härter bei Raumtemperatur flüssig ist.

Die feste Komponente K3 ist bevorzugt pulverförmig, und dabei bevorzugt rieselfäh ig.

In einer bevorzugten Ausführungsform ist der Füllstoffanteil an der Epoxidharzzusammensetzung und/oder an dem ausgehärteten Epoxidharz, bezogen auf das Gesamtgewicht, mindestens 50 Gew.%, bevorzugt mindestens 60 Gew.% oder mindestens 70 Gew.%, noch mehr bevorzugt mindestens 80 Gew.% oder mindestens 85 Gew.% oder mindestens 90 Gew.%. Bevorzugt liegt der Füllstoffanteil zwischen 50 und 90 Gew.%, insbesondere zwischen 60 und 90 Gew.% oder zwischen 78 und 90 Gew.%. Es wurde gefunden, dass erfindungsgemäß hohe Füllstoffanteile von 80 bis 90 Gew.% problemlos in Epoxidharzzusammensetzungen eingearbeitet werden können, wobei ein gutes Fließverhalten erreicht wird und stabile ausgehärtete Epoxidharze erhalten werden.

Bevorzugt werden bezogen auf 100 Gewichtsteile anorganische Füllstoffe zwischen 0,01 und 2 Gewichtsteile, insbesondere zwischen 0,02 und 1 Gewichtsteile, noch mehr bevorzugt 0,1 bis 0,5 Gewichtsteile Polycarboxylatether eingesetzt.

Gegenstand der Erfindung ist auch ein ausgehärtetes Epoxidharz, also ein ausgehärteter Kunststoff, erhältlich durch Aushärten einer erfindungsgemäßen Epoxidzusammensetzung oder durch Vermischen der Komponenten und Aushärten eines erfindungsgemäßen Mehrkomponentensystems. Mit dem Begriff "Epoxidharz" wird hier, im Einklang mit dem üblichen Sprachgebrauch, die ausgehärtete Zusammensetzung bezeichnet, in welche die weiteren Bestandteile, wie Füllstoffe, integriert sind. Das Epoxidharz ist ausgehärtet, wenn keine wesentliche Reaktion mehr zwischen Epoxidgruppen und dem Härter stattfindet. Das ausgehärtete Epoxidharz, das eine feste Konsistenz aufweist, kann beispielsweise ein dreidimensionaler Gegenstand oder ein Bauteil, eine Beschichtung, eine Haftbrücke, eine Spachtelmasse, ein Bestandteil eines Laminats, ein Klebstoff, eine Füllung oder Dichtung sein. Bevorzugt ist der Füllstoff gleichmäßig oder im Wesentlichen gleichmäßig in dem ausgehärteten Kunststoff verteilt.

Das ausgehärtete Epoxidharz unterscheidet sich strukturell von bekannten Epoxidharzen und weist vorteilhafte Eigenschaften auf. Mit dem erfindungsgemäßen Verfahren können trotz guter Verarbeitbarkeit große Mengen anorganischer Füllstoffe gleichmäßig eingearbeitet werden, ohne dass die Stabilität beeinträchtigt wird. Wegen des hohen Feststoffgehalts weisen solche Festkörper einen besonders niedrigen Schwund und einen geringem thermischen Ausdehnungskoeffizienten auf. Bevorzugt weist daher das ausgehärtete Epoxidharz einen hohen Gehalt an anorganischen Füllstoffen auf.

Gegenstand der Erfindung ist auch die Verwendung von Polycarboxylatethern als Dispergiermittel für anorganische Füllstoffe in aushärtbaren Epoxidharzzusammensetzungen. In diesem Zusammenhang bedeutet der Begriff "Dispergiermittel", dass die Polycarboxylatether allgemein die Vermischung der Komponenten der flüssigen bzw. pastösen Epoxidharzzusammensetzung fördern, insbesondere die Vermischung der Füllstoffe mit dem Epoxidharz. In einer bevorzugten Ausführungsform erfolgt die Verwendung der Polycarboxylatether als Fließverbesserer. Dies bedeutet, dass der Polycarboxylatether die Fließfähigkeit einer Epoxidharzzusammensetzung enthaltend anorganische Füllstoffe erhöht, verglichen mit einer identischen Zusammensetzung, die den Polycarboxylatether nicht enthält. Das Dispergiermittel kann auch die Entmischung der füllstoffhaltigen Epoxidharzzusammensetzung verhindern.

Gegenstand der Erfindung ist auch die Verwendung einer erfindungsgemäßen Epoxidharzzusammensetzung oder eines erfindungsgemäßen Mehrkomponentensystems zum Verkleben, Beschichten oder Abdichten von Substraten und/oder zum Herstellen von Formkörpern. Die Verwendung des Mehrkomponentensystems erfolgt dabei, indem die Komponenten zunächst vermischt werden, so dass eine erfindungsgemäße aushärtbare Epoxidharzzusammensetzung erhalten wird. Nach Einarbeitung aller Komponenten und gegebenenfalls Aktivierung erfolgt die Aushärtung. Dabei können auch weitere Komponenten oder Zusatzmittel hinzugefügt werden.

Gegenstand der Erfindung ist auch ein fester Füllstoff, der mit einem Polycarboxylatether beschichtet ist, enthaltend
(a) 93 bis 99,97 Gew.%, bevorzugt 96 bis 99,88 Gew.%, noch mehr bevorzugt 98 bis 99,7 Gew.% anorganische Füllstoffe,
(b) 0,01 bis 2 Gew.%, bevorzugt 0,02 bis 1 Gew.%, noch mehr bevorzugt 0,1 bis 0,5 Gew.% Polycarboxylatether, und
(c) 0,02 bis 5 Gew.% bevorzugt 0,1 bis 2,5 Gew.%, noch mehr bevorzugt 0,2 bis 1,5 Gew.% organisches Lösungsmittel.

Die Summe der Füllstoffe, Polycarboxylatether und organischen Lösungsmittel ist dabei bevorzugt 100%. Der feste Füllstoff ist zur Verwendung als Komponente K3 für ein erfindungsgemäßes Mehrkomponentensystem geeignet. Der mit PCE beschichtete Füllstoff kann aber auch als Füllstoffkomponente in K1 oder K2 eingearbeitet werden.

Gegenstand der Erfindung ist auch ein Verfahren zur Herstellung einer Komponente K3 für ein erfindungsgemäßes Mehrkomponentensystem, umfassend die Schritte
(i) Bereitstellen von 93 bis 99,7 Gew.% anorganischen Füllstoffen,
(ii) Imprägnieren mit einer Lösung oder Suspension aus
   0,01 bis 2 Gew.% Polycarboxylatether und
   0,02 bis 5 Gew.% organisches Lösungsmittel,
   wobei die Summe der Füllstoffe, Polycarboxylatether und organischen Lösungsmittel bevorzugt 100% ist.

In einer bevorzugten Ausführungsform erfolgt keine Abtrennung des Lösungsmittels. Dabei wird bevorzugt die Menge des Lösungsmittels so eingestellt, dass dieses vollständig von den anorganischen Füllstoffen absorbiert wird, so dass eine pulverförmige Füllstoffzubereitung erhalten wird. Nach dem Imprägnieren kann Lösungsmittel, das heißt zumindest ein Teil des Lösungsmittels, auch entfernt werden, beispielsweise durch Trocknen.

Die Komponente K3 kann beispielsweise als Pulver, Schuppen, Pellets oder Granulat bereitgestellt werden. Solche festen Zusätze lassen sich gut transportieren und lagern.

Das Dispergiermittel kann insbesondere verwendet werden als Verflüssiger, zur Verbesserung der Verarbeitbarkeit und/oder zur Verbesserung der Fliessfähigkeit von aushärtbaren Epoxidharzzusammensetzungen. Bei der erfindungsgemäßen Verwendung zeigen die Epoxidharze eine verbesserte Fließfähigkeit. Bei der erfindungsgemäßen Verwendung werden bevorzugt sowohl die Fließgeschwindigkeit als auch die Fließstrecke verbessert. Das Fließverhalten ist über das Ausbreitmaß nach 10 min, 20 min oder 30 min bestimmbar, jeweils nach Vermischung aller Komponenten inklusive des Härters und der Epoxidharze. Es war erfindungsgemäß überraschend, dass Polycarboxylatether in nicht wässrigen Epoxidharzzusammensetzungen eine dispergierende und verflüssigende Wirkung entfalten können. Dies war nicht zu erwarten, da Polycarboxylatether üblicherweise in Zementzusammensetzungen eingesetzt werden, die wässrig und zudem stark basisch sind, wo die Polycarboxylatether in der Matrix löslich sind, und die sich daher signifikant von aushärtbaren Epoxidharzzusammensetzungen unterscheiden.

Bevorzugt wird durch den erfindungsgemäßen Zusatz von Polycarboxylatethern, beispielsweise in einer Menge von 0,05 Gew.% oder 0,1 Gew.%, das Ausbreitmaß bzw. Fließverhalten einer Epoxidharzzusammensetzung sofort oder nach 1, 3, 10 oder 30 min nach dem Vermischen um mehr als 5%, bevorzugt mehr als 10% oder mehr als 20% erhöht, verglichen mit einer identischen Zusammensetzung ohne den Polycarboxylatether. Das Ausbreitmaß bzw. Fließverhalten kann dabei bestimmt werden wie in den Ausführungsbeispielen beschrieben, und/oder analog zu DIN EN 13395-1 oder DIN EN 1015-3.

Die Erfindung löst die ihr zugrunde liegende Aufgabe. Erfindungsgemäß wird ein einfacher und effizienter Weg bereitgestellt, um die Verarbeitbarkeit und das Fließverhalten von Epoxidharzzusammensetzungen mit Füllstoffen zu verbessern. Durch die Zugabe von Polycarboxylatethern wird das Fließverhalten über einen langen Zeitraum deutlich verbessert. Außerdem kann die Zusammensetzung einen hohen Anteil von anorganischen Füllstoffen aufnehmen. Dabei kann eine homogene Verteilung des Füllstoffes in der Zusammensetzung erreicht werden. Überraschenderweise können diese vorteilhaften Effekte bereits erzielt werden, wenn die Füllstoffe mit relativ geringen Mengen Polycarboxylatethern beschichtet werden. Dies ist gerade bei hohen Füllstoffgehalten besonders wichtig, da ein hoher Anteil von nicht vernetzbaren Polycarboxylatethern die Stabilität der ausgehärteten Epoxidmatrix verringern würde. Wahrscheinlich können die Polycarboxylatether wegen der erfindungsgemäßen Beschichtung ihre vorteilhaften, verflüssigenden Wirkungen unmittelbar an den Füllstoff/Epoxidharz-Grenzflächen entfalten.

Die erfindungsgemäße Epoxidharzzusammensetzung kann als Mehrkomponentensystem bereitgestellt werden und ist durch Vermischen der Komponenten innerhalb von wenigen Minuten herstellbar. Die Komponenten sind einfach zugänglich und handhabbar und relativ kostengünstig. Es ist nicht erforderlich, die Füllstoffe chemisch zu modifizieren. Der Anwender kann mit den Polycarboxylatethern das Fließverhalten verschiedener spezieller Epoxidharzzusammensetzungen individuell einstellen. Die Polycarboxylatether müssen nur in geringen Mengen eingesetzt werden und beeinflussen nicht in nachteiliger Weise die Stabilität der ausgehärteten Epoxidharze. Durch erhöhte Füllgrade der Epoxidharze können Produkte mit verbesserten Eigenschaften hergestellt werden und Rohstoffkosten eingespart werden, da anorganische Füllstoffe im Allgemeinen kostengünstiger als Epoxidharze sind. Die erfindungsgemäßen Dispergiermittel müssen nicht durch chemische Reaktionen kovalent mit Füllstoffen verbunden werden, was auch Energiekosten einspart, da keine erhöhten Reaktionstemperaturen erforderlich sind.

### Figuren:

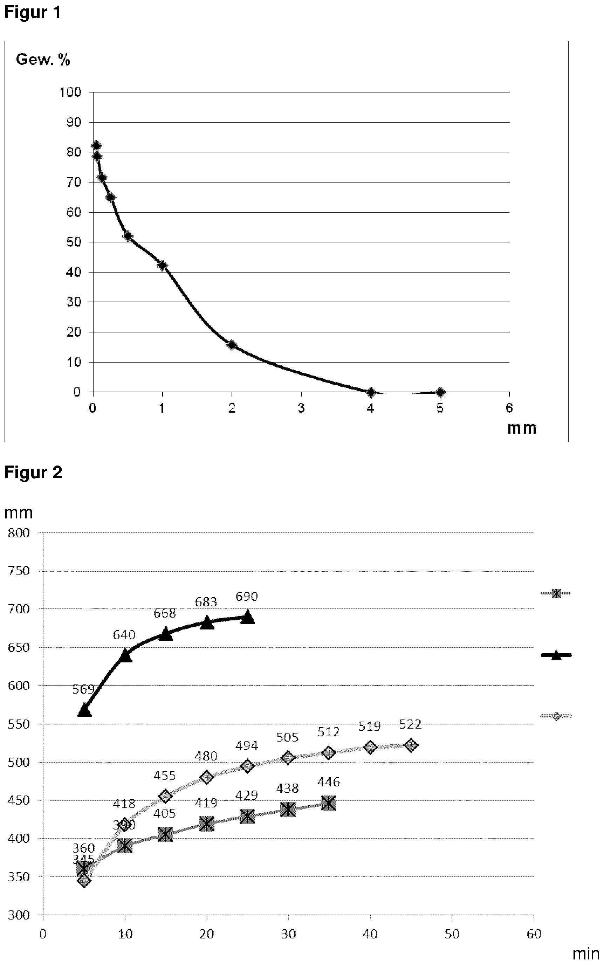

- Fig. 1: zeigt die Sieblinie der Komponente K3 wie in Ausführungsbeispiel 1 beschrieben. Aufgetragen ist der Siebrückstand in Gewichtsprozent gegen die Siebgröße in Millimeter.
- Fig. 2: zeigt das Fließverhalten der Zusammensetzungen E3 und V3 aus Ausführungsbeispiel 4 in einer Fließrinne wie in Beispiel 5 beschrieben. Aufgetragen ist die Fließstrecke in Millimeter gegen die Fließzeit in Minuten (von 0 bis 60 Minuten). Die untere Kurve (Quadrate) zeigt das Fließverhalten der Zusammensetzung V3 ohne PCE, während die obere Kurve (Dreiecke) das Fließverhalten der Zusammensetzung E3 mit PCE zeigt. Zusätzlich ist das Fließverhalten der Zusammensetzung E4 mit PCE mit höherem Füllstoffanteil gezeigt (mittlere Kurve, Rhomben).

### Ausführungsbeispiele

### Beispiel 1: Herstellung eines Dreikomponentensystems

Es wurde ein Dreikomponentensystem als Basis für einen Epoxy-Fließmörtel mit einem Füllstoffgehalt von ca. 82 Gew.% hergestellt.

### Komponente K1: Epoxidharz

| **Bestandteil** | **Gew.%** |
|---|---|
| Bisphenol-A-Epichlorhydrinharze mit durchschnittlichem Molgewicht >700 | 74,7 |
| Gemisch aus Silicon-freiem Entschäumer, Lösungsmittelnaphtha und 2-Methoxy-1-methylethylacetat | 0,3 |
| 1,6-Hexandioldiglycidylether | 25 |
| Gesamt | 100 |

Das Epoxidharz wurde vorgelegt. Alle übrigen Rohstoffe wurden zugegeben und für ca. 5 Minuten homogenisiert.

### Komponente K2: Härter

| **Bestandteil** | **Gew.%** |
|---|---|
| Triethylentetramin | 100 |

### Komponente K3: Füllstoff:

| **Bestandteil** | **Gew.%** |
|---|---|
| Quarzsandgemisch | 79,5 |
| TiO₂ Weißpigment | 0,45 |
| Zement, Korngröße < 0,06 mm | 20 |
| Eisenoxid schwarz | 0,05 |
| Polycarboxylatether-Lösung (20% PCE gelöst in 80% Benzylalkohol) | 1 |
| Gesamt | 101 |

Die Komponente K3 setzt sich aus einer Mischung verschiedener Quarzsande mit Korngrößen im Bereich 0,06 mm bis 3,2 mm zusammen. Die Sieblinie des Quarzsandgemischs ist in Figur 1 gezeigt. Die Komponente K3 enthält zusätzlich Zement als anorganischen Feinstfüllstoff und einen geringen Anteil Titandioxid und Eisenoxid als Pigmente.

Der Polycarboxylatether wird zuvor in Benzylalkohol gelöst. Die Füllstoffe werden nacheinander eingewogen und in einen Rührbehälter gegeben (zuerst die groben Füllstoffe, zuletzt die feinsten Füllstoffe). Anschließend wird das Polycarboxylatether/Benzylalkohol-Gemisch zugegeben und für ca. 5 Minuten bei RT gemischt. Als Rühraggregat wurde ein Hobart Planetenmischer N50 CE auf Stufe 1 eingesetzt.

### Beispiel 2: Herstellung von aushärtbaren Epoxidharzzusammensetzungen E1 und V1

Aus den Komponenten K1 bis 3 wurde durch Vermischen eine erfindungsgemäße Epoxidzusammensetzung E1 hergestellt. Das Mischungsverhältnis der Komponente K1 :K2:K3 betrug 6:1:35 Gewichtsteile.

Zum Vergleich wurde eine Epoxidzusammensetzung V1 hergestellt, deren Komponente K3 kein Polycarboxylatether/Benzylalkohol Gemisch enthielt und die im Übrigen identisch zu der Zusammensetzung E1 war.

### Beispiel 3: Bestimmung des Fließverhaltens der Epoxidharzzusammensetzungen E1 und V1

Das Fließverhalten der Epoxidzusammensetzungen E1 und V1 wurde mit Hilfe eines Messing-Konus (ca. 500g Epoxidharzmörtel) in Anlehnung an DIN EN 13395-1 oder EN 1015-3 bestimmt und das Ausbreitmaß (Durchmesser) nach dem Aushärten ermittelt. Das Ausbreitmaß ohne Polycarboxylatether/Benzylalkohol-Gemisch betrug 265 mm. Das Ausbreitmaß mit ca. 0,85% Anteil Polycarboxylatether/Benzylalkohol-Gemisch betrug 310 mm, was einer Verbesserung von etwa 17% entspricht.

### Beispiel 4: Herstellung und Untersuchung von aushärtbaren Epoxidharzzusammensetzungen E2 und V2 mit kommerziell erhältlichem Füllstoff

Es wurde ein weiteres Dreikomponentensystem hergestellt, bei dem die Komponenten K1 und K2 den oben in Beispiel 1 beschriebenen entsprechen. Als Komponente K3 wird die Füllstoffkomponente eines kommerziell erhältlichen Epoxyzements (Markenbezeichnung Masterflow 410 PCT BASF Construction Chemicals) eingesetzt. Zu dieser Füllstoffkomponente wurden 0,3 Gew.% einer Lösung aus 95% Gew.% Benzylalkohol und 5 Gew.% Polycarboxylatether gegeben und im Planetenmischer 5 Minuten bei RT gerührt.

Die Komponenten K1 und K2 wurden im Mischungsverhältnis 6:1 (Gewichtsteile) miteinander vermischt, die Komponente K3 zugegeben (Mischungsverhältnis K1:K2:K3 = 6:1:60,9 oder (K1+K2):K3 = 1 : 8,7) und 3 Minuten mit Hilfe eines Wendelmischers oder Korbmischers homogenisiert, wobei die Epoxidharzzusammensetzung E2 erhalten wurde. Zum Vergleich wurde eine Epoxidzusammensetzung V2 hergestellt, deren Komponente K3 kein Polycarboxylatether/Benzylalkohol Gemisch enthielt und die im Übrigen identisch zu der Zusammensetzung E2 war.

Das Material wurde jeweils in Anlehnung an DIN EN 13395-1 oder EN 1015-3 in einen Messingring, der auf einer planen Kunststoffoberfläche steht, gefüllt. Der Messingring wurde angehoben und das Ausbreiten des Fließmörtels beobachtet. Nach dem Aushärten wurde der Durchmesser/das Ausbreitmaß bestimmt. Die Zusammensetzung E2 mit Polycarboxylatether/Benzylalkohol fließt besser und zeigt ein um ca. 13% vergrößertes Ausbreitmaß als Zusammensetzung V2 ohne Polycarboxylatether/Benzylalkohol.

Das Ausbreitmaß ohne Polycarboxylatether/Benzylalkohol-Gemisch betrug 228 mm. Das Ausbreitmaß mit ca. 0,3% Anteil Polycarboxylatether/Benzylalkohol-Gemisch betrug 258 mm, was einer Verbesserung von etwa 13% entspricht.

### Beispiel 5: Herstellung und Untersuchung von aushärtbaren Epoxidharzzusammensetzungen E3 und V3 mit kommerziell erhältlichem Füllstoff

Zu der Füllstoffkomponente eines kommerziell erhältlichen Epoxyfließmörtels (Markenbezeichnung Sikadur-42 LE; Sika Canada) wurden 0,3 Gew.% einer Lösung aus 95 Gew.% Benzylalkohol und 5 Gew.% Polycarboxylatether zugegeben und im Planetenmischer 5 Minuten bei RT gerührt, wobei die Komponente K3 erhalten wurde.

Die Komponenten K1 und K2 wurden im Mischungsverhältnis 6:1 (Gewichtsteile) miteinander vermischt, Komponente K3 zugegeben (Mischungsverhältnis K1:K2:K3 = 6:1:45,5 oder (K1+K2):K3 = 1 : 6,5) und 3 Minuten mit Hilfe eines Wendelmischers oder Korbmischers homogenisiert, wobei die Epoxidharzzusammensetzung E3 erhalten wurde. Zum Vergleich wurde eine Epoxidzusammensetzung V3 hergestellt, deren Komponente K3 kein Polycarboxylatether/Benzylalkohol Gemisch enthielt und die im Übrigen identisch zu der Zusammensetzung E3 war.

Das Material wird in eine Fließrinne gemäß EN 13395-2 gefüllt und der Fließweg in Abhängigkeit von der Zeit bestimmt. Der Fließkurvenverlauf über einen Zeitraum von etwa 35 Minuten ist in Figur 2 gezeigt. Die Epoxidharzzusammensetzung E3 fließt wesentlich schneller (steilerer Anstieg im Kurvenbeginn) und in vergleichbarer Zeit auch weiter als die Zusammensetzung V3. Die zurückgelegte Fließstrecke der Epoxidharzzusammensetzung E3 ist nach 25 Minuten bereits um 60% größer. Selbst bei einer Erhöhung des Füllstoffgehaltes auf ein Mischungsverhältnis der Flüssigkomponenten zu Füllstoff-Komponente auf (K1 +K2) : K3 = 1 : 8,5 in einer Epoxidharzzusammensetzung E4 fließt der Fließmörtel mit PCE immer noch weiter als der gleiche Fließmörtel ohne PCE bei einem Verhältnis der Komponenten von (K1+K2):K3 von 1 : 6,5.

In weiteren Versuchen wurde gefunden, dass sich bei den Epoxidharz-Fließmörteln das Mischungsverhältnis zwischen flüssigem Bindemittel und Füllstoffkomponente K3, je nach gewünschtem Fließverhalten, beispielsweise von 1:4 bis 1:9 ((K1+K2):K3, gravimetrisch) variieren lässt (ca. 78-90 Gew.% Füllstoffgehalt). Dabei ist es vorteilhaft, die Konzentration der Polycarboxylate-ther jeweils anzupassen.

### Beispiel 6: Einfluss des Lösungsmittels

Um auszuschließen, dass das Lösungsmittel die Verbesserung der Fließfähigkeit erfindungsgemäßer Zusammensetzungen verursacht, wurden Vergleichsversuche mit vergleichbaren Mengen an Lösungsmittel, aber ohne Polycarboxylatether durchgeführt. Dazu wurde die Fließfähigkeit von Epoxidharzzusammensetzung mit Komponenten K1 und K2 gemäß Beispiel 1 und verschiedener Füllstoffkomponenten N3 (Grundzusammensetzung vergleichbar mit Beispiel 1, jedoch ohne PCE und Lösungsmittel) verglichen. Das Mengenverhältnis war (K1+K2):K3 = 1:6,5. Die Unterschiede der Epoxidharzzusammensetzungen und die Ergebnisse sind in der folgenden Tabelle zusammengefasst. Die Ergebnisse zeigen, dass der Polycarboxylatether die Fließfähigkeit deutlich verbessert.

| **Komponenten** | **Ausbreitmaß * [ca. ø in mm]** |
|---|---|
| K1 +K2+ N3 | 252 mm |
| K1+K2+ N3 + 0,3% Benzylalkohol | 260 mm |
| K1+K2+ N3 + 0,03% Polycarboxylatether (Sika Viscocrete-125) + 0,27% Benzylalkohol) | 281 mm |

| | |
|---|---|
| * ca. 500g, gemessen mit Konus bei 23°C (DIN EN 13395-1 und EN 1015-3) | |

### Beispiel 7: Epoxidharzzusammensetzung E4

Es wurde eine weitere Epoxidharzzusammensetzung E4 auf Basis eines Dreikompomponentensystems hergestellt und untersucht. Die Herstellung der Komponenten, Verarbeitung und Bestimmung des Ausbreitmaßes erfolgten wie oben für die Beispiele 1 bis 3, sofern nicht nachfolgend unterschiedlich beschrieben. Es wurde ein Dreikomponentensystem als Basis für eine Epoxidharzbeschichtung mit einem Füllstoffgehalt von ca. 63 Gew.% hergestellt.

### Komponente K1: Epoxidharz

| **Bestandteil** | **Gew. %** |
|---|---|
| Bisphenol-A-Epichlorhydrinharze mit durchschnittlichem Molgewicht >700 | 85 |
| C12/C14-Alkylglycidylether | 10 |
| schwere aromatische Lösemittelnaphtha (Erdöl), | 4,9 |
| Gemisch aus Lösungsmittelnaphtha und 2-Methoxy-1-methylethylacetat | 0,1 |
| Gesamt | 100 |

### Komponente K2: Härter

| **Bestandteil** | **Gew.%** |
|---|---|
| Benzylalkohol | 40 |
| Isophorondiamin | 25 |
| Triethylentetramin | 20 |
| schwere aromatische Lösemittelnaphtha (Erdöl), | 15 |
| Gesamt | 100 |

### Komponente K3: Füllstoff:

| **Bestandteil** | **Gew.%** |
|---|---|
| Natürliches CaCO₃, < 0,06 mm Korngröße | 60 |
| Quarzmehl < 0,06 mm Korngröße | 38,4 |
| TiO₂ Weißpigment | 1,2 |
| Eisenoxid schwarz | 0,1 |
| PCE-Lösung (20% PCE gelöst in 80% Benzylalkohol) | 0,3 |
| Gesamt | 100 |

Die Komponente K3 wurde hergestellt, indem zunächst Sika ViscoCrete-125 (Sika, CH) in Benzylalkohol gelöst wird (20 Gew.% Sika ViscoCrete-125 und 80 Gew.% Benzylalkohol). Quarzmehl wird im Rührbehälter vorgelegt und die Lösung Sika ViscoCrete/Benzylalkohol zugegeben und für 3 Minuten mittels Planetenmischer N50 CE (Stufe 1) bei RT gemischt. Nach Zugabe der restlichen Füllstoffkomponenten wird noch einmal 3 Minuten im Planetenmischer bei RT gemischt. Die Komponente K3 enthält Calciumcarbonat und Quarzmehl als Feinstfüllstoffe.

Das Mischungsverhältnis (gravimetrisch) der Einzelkomponenten in der Epoxidharzzusammensetzung beträgt K1:K2:K3-Komponente = 3:1:7; bzw. Flüssig- zu Füllstoff-Komponente (K1+K2):K3= 1:1,75 (Gewichtsteile).

Das Fließverhalten wurde anhand von 150 g Proben bestimmt und das Ausbreitmaß (Durchmesser) nach dem Aushärten ermittelt. Das Ausbreitmaß ohne Polycarboxylatether/Benzylalkohol-Gemisch betrug 212 mm.
Das Ausbreitmaß mit 0,2% Polycarboxylatether/Benzylalkohol-Gemisch betrug 250 mm. Somit konnte durch den Zusatz von Polycarboxylatether das Ausbreitmaß um mehr als 18% erhöht werden.

### Beispiel 8: Einfluss des Lösungsmittels

Es wurden Dreikomponentensysteme und Epoxidharzzusammensetzungen E5 und E6 hergestellt gemäß Beispiel 7 mit folgender Abwandlung. In einem Dreikomponentensystem gemäß Beispiel 7 wurden Komponenten K3 hergestellt, wobei eine Komponente K3 mit 0,3 Gew.% Benzylalkohol beschichtet war, eine weitere mit einer Lösung aus 0,06 Gew.% Polycarboxylatether und 0,24 Gew.% Benzylalkohol. Das Fließverhalten wurde anhand von 150 g Proben bestimmt und das Ausbreitmaß (Durchmesser) nach dem Aushärten ermittelt. Das Ausbreitmaß von E5 ohne Polycarboxylatether nur mit 0,3% Benzylalkohol betrug ca. 210 mm. Das Ausbreitmaß von E6 mit 0,06 Gew.% Polycarboxylatether und 0,24 Gew.% Benzylalkohol betrug ca. 250-260 mm. Die Erhöhung des Ausbreitmaßes um ca. 20% zeigt, dass diese durch den Polycarboxylatether bewirkt wird.

## Patentansprüche

1. Aushärtbare Epoxidharzzusammensetzung, enthaltend mindestens ein Epoxidharz mit durchschnittlich mehr als einer Epoxidgruppe pro Molekül, mindestens einen anorganischen Füllstoff und mindestens einen Polycarboxylatether, wobei der anorganische Füllstoff mit dem Polycarboxylatether beschichtet ist.

2. Epoxidharzzusammensetzung gemäß Anspruch 1, wobei der beschichtete anorganische Füllstoff durch Imprägnieren mit einer Lösung oder Suspension erhalten wurde, die den Polycarboxylatether und ein Lösungsmittel enthält.

3. Epoxidharzzusammensetzung gemäß mindestens einem der vorhergehenden Ansprüche, wobei das Lösungsmittel ein polares organisches Lösungsmittel ist, insbesondere ein Ester, Ether oder Alkohol.

4. Epoxidharzzusammensetzung gemäß mindestens einem der vorhergehenden Ansprüche, wobei die anorganischen Füllstoffe einen Anteil von Feinstfüllstoffen aufweisen, der mindestens 5 Gew.% oder mindestens 10 Gew.% ist, bezogen auf das Gesamtgewicht der anorganischen Füllstoffe.

5. Epoxidharzzusammensetzung gemäß mindestens einem der vorhergehenden Ansprüche, enthaltend zusätzlich mindestens einen Härter und/oder mindestens einen Reaktivverdünner.

6. Epoxidharzzusammensetzung gemäß mindestens einem der vorhergehenden Ansprüche, wobei
das Epoxidharz mindestens einen Glycidylether umfasst, und/oder
der Härter mindestens ein Polyamin enthält, das bevorzugt ausgewählt ist aus der Gruppe, bestehend aus aliphatischen, cycloaliphatischen oder arylaliphatischen, primären Diaminen, Triaminen, Tetraaminen, Polyaminen mit mehr als vier Amingruppen pro Molekül, sekundäre Amingruppen aufweisende Polyamine, Amin/Polyepoxid-Addukte, Poly(ethylenimine), Polyamidoamine, Mannichbasen und Aminogruppen-terminierte Butadien/Acrylnitril-Copolymere, und/oder
der anorganische Füllstoff mindestens einen Füllstoff aufweist, der ausgewählt ist aus Siliciumverbindungen, wie Siliciumdioxid, Silicaten und gefällten und pyrogenen Kieselsäuren, Metalloxiden, wie Titandioxid, Eisenoxid, Alumina, Zinkoxid und Magnesiumoxid; Metallcarbonaten, wie Calciumcarbonat oder Dolomit; Metallsulfaten, wie Calciumsulfat und Bariumsulfat; Metallhydroxiden, wie Aluminiumhydroxid, Nitriden oder Carbiden, Tonmineralen, wie Kaolin, Flugaschen, Zement, Gläsern und keramischen Werkstoffen.

7. Epoxidharzzusammensetzung nach mindestens einem der vorhergehenden Ansprüche, wobei der Polycarboxylatether über Ester-, Amid- und/oder Ethergruppen an eine Hauptkette angebundene Seitenketten aufweist, wobei die Hauptkette mindestens eine Acrylsäureeinheit oder ein Salz davon und/oder mindestens eine Methacrylsäureeinheit oder ein Salz davon aufweist.

8. Epoxidharzzusammensetzung nach mindestens einem der vorhergehenden Ansprüche, wobei der Polycarboxylatether umfasst:
a) mindestens eine Säureeinheit **A** der Formel (I): 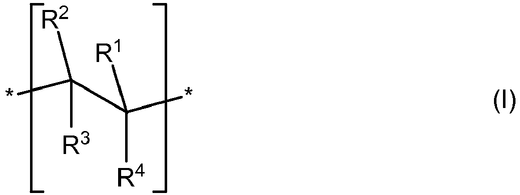
wobei jedes R¹, R² und R³ unabhängig von den anderen für H, -COOM, -CH₂COOM oder eine Alkylgruppe mit 1 bis 5 Kohlenstoffatomen stehen,
jedes R⁴ unabhängig von den anderen für -COOM, -CH₂COOM, -S0₂-OM, -O-PO(OM)₂ und/oder -PO(OM)₂ steht;
oder wobei R³ mit R⁴ einen Ring bildet zu -CO-O-CO-;
wobei M für H, ein Alkalimetall, ein Erdalkalimetall, Ammonium, ein Ammoniumkation, eine organische Ammoniumverbindung oder Mischungen davon steht;
mit der Massgabe, dass insgesamt ein einziger oder zwei der Reste R¹, R², R³ und R⁴ Säuregruppen sind,
wobei die Säureeinheit **A** bevorzugt eine Acrylsäureeinheit oder ein Salz davon und/oder eine Methacrylsäureeinheit oder ein Salz davon ist; und
b) mindestens einer Struktureinheit **B** der Formel (II); 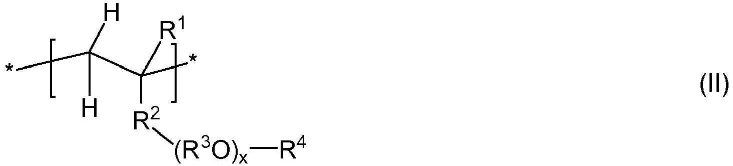 wobei
R¹ unabhängig voneinander für H oder CH₃ steht;
R² unabhängig voneinander für ein Estergruppe -CO-O- oder für eine Amidgruppe -CO-NH- steht;
R³ unabhängig voneinander für eine C₂ - C₆ Alkylengruppe, insbesondere für eine Ethylen- oder Propylengruppe steht,
R⁴ unabhängig voneinander für H, einen C₁ - C₁₂ Alkyl- oder Cycloalkylrest, einen C₇ - C₂₀ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, steht, und
x unabhängig voneinander ein Wert zwischen 3 und 250 ist,
wobei die Hauptkette des Polycarboxylatethers ein lineares Copolymer ist, das unter Verwendung der mindestens einen Säureeinheit oder einem Salz oder Anhydrid davon durch Polymerisation erhalten wurde,
wobei die Struktureinheit **B** Bestandteil dieses linearen Copolymers ist.

9. Epoxidharzzusammensetzung gemäß mindestens einem der vorhergehenden Ansprüche, wobei der Polycarboxylatether mindestens eine weitere Struktureinheit **C** aufweist, die von den Struktureinheiten **A** und **B** verschieden ist, und die ausgewählt ist aus einer Ether-, Ester, Amid- oder Imideinheit, einer Säureeinheit, ausgewählt aus Carbonsäure-, Sulfonsäure-, Phosphonsäure, Phosphorsäureester-, Carbonylamidomethylpropansulfonsäure und deren Salzen, oder einer Polyoxyalkylenoxycarbonyl-, Polyoxyalkylenaminocarbonyl-, Polyoxyalkylenoxyalkyl-, Polyoxyalkylenoxy-, Hydroxyethyloxycarbonyl-, Acetoxy-, Phenyl- oder N-Pyrrolidonylgruppe,
wobei der Polycarboxylatether bevorzugt
5 bis 95 Mol-%, vorzugsweise 10 bis 80 Mol-% Acrylsäureeinheiten **A** und/oder Methacrylsäureeinheiten **M,**
5 bis 50 Mol-%, vorzugsweise 10 bis 40 Mol-% der Struktureinheit **B,** und
0 bis 30 Mol-%, vorzugsweise 0 bis 15 Mol-% der Struktureinheit **C** umfasst,
jeweils bezogen auf die Gesamtzahl aller monomeren Einheiten in der Hauptkette des Polycarboxylatethers.

10. Mehrkomponentensystem zur Herstellung einer aushärtbaren Epoxidharzzusammensetzung gemäß mindestens einem der vorhergehenden Ansprüche, umfassend mindestens
eine Komponente K1, enthaltend das mindestens eine Epoxidharz, und
gegebenenfalls eine Härter-Komponente K2, enthaltend den mindestens einen Härter,
wobei mindestens ein Härter in der Komponente K1 oder K2 enthalten ist,
wobei der mindestens eine mit dem Polycarboxylatether beschichtete anorganische Füllstoff in der Komponente K1, K2 und/oder einer weiteren Komponente K3 enthalten ist.

11. Mehrkomponentensystem gemäß Anspruch 10, umfassend mindestens
eine Komponente K1, enthaltend mindestens ein Epoxidharz,
eine Komponente K2, enthaltend mindestens einen Härter, und
eine feste Komponente K3, enthaltend
(a) 93 bis 99,7 Gew.% anorganische Füllstoffe,
(b) 0,01 bis 2 Gew.% Polycarboxylatether und
(c) 0,02 bis 5 Gew.% Lösungsmittel.

12. Ausgehärtetes Epoxidharz, erhältlich durch Aushärten einer Epoxidharzzusammensetzung gemäß mindestens einem der Ansprüche 1 bis 9 oder durch Vermischen der Komponenten und Aushärten eines Mehrkomponentensystems gemäß mindestens einem der Ansprüche 10 bis 11.

13. Verwendung von Polycarboxylatethern als Dispergiermittel für anorganische Füllstoffe in aushärtbaren Epoxidharzzusammensetzungen.

14. Verwendung einer Epoxidharzzusammensetzung gemäß mindestens einem der Ansprüche 1 bis 9 oder eines Mehrkomponentensystems gemäß mindestens einem der Ansprüche 10 bis 11 zum Verkleben, Beschichten oder Abdichten von Substraten und/oder zur Herstellung von Formkörpern.

15. Fester Füllstoff, der mit einem Polycarboxylatether beschichtet ist, zur Verwendung als Komponente K3 in einem Mehrkomponentensystem gemäß mindestens einem der Ansprüche 3 bis 11, enthaltend
(a) 93 bis 99,97 Gew.% anorganische Füllstoffe,
(b) 0,01 bis 2 Gew.% Polycarboxylatether und
(c) 0,02 bis 5 Gew.% organisches Lösungsmittel.

## Claims

1. A curable epoxy resin composition containing at least one epoxy resin having on average more than one epoxide group per molecule, at least one inorganic filler and at least one polycarboxylate ether, wherein the inorganic filler is coated with the polycarboxylate ether.

2. The epoxy resin composition according to claim 1, wherein the coated inorganic filler was obtained by impregnating with a solution or suspension containing the polycarboxylate ether and a solvent.

3. The epoxy resin composition according to at least one of the preceding claims, wherein the solvent is a polar organic solvent, in particular an ester, ether or alcohol.

4. The epoxy resin composition according to at least one of the preceding claims, wherein the inorganic fillers have a proportion of finely divided fillers of at least 5 wt.% or at least 10 wt.% based on the total weight of the inorganic fillers.

5. The epoxy resin composition according to at least one of the preceding claims, additionally containing at least one curing agent and/or at least one reactive diluent.

6. The epoxy resin composition according to at least one of the preceding claims, wherein
the epoxy resin comprises at least one glycidyl ether, and/or the curing agent contains at least one polyamine, which is preferably selected from the group consisting of aliphatic, cycloaliphatic or arylaliphatic primary diamines, triamines, tetramines, polyamines with more than four amine groups per molecule, secondary amine group-containing polyamines, amine/polyepoxide adducts, poly(ethylene imines), polyamidoamines, Mannich bases and amino-terminated butadiene/acrylonitrile copolymers, and/or
the inorganic filler has at least one filler selected from silicon compounds such as silica, silicates and precipitated and pyrogenic silicas, metal oxides such as titanium dioxide, iron oxide, alumina, zinc oxide and magnesium oxide; metal carbonates such as calcium carbonate or dolomite; metal sulfates such as calcium sulfate and barium sulfate; metal hydroxides such as aluminum hydroxide, nitrides or carbides, clay minerals such as kaolin, fly ash, cement, glass and ceramic materials.

7. The epoxy resin composition according to at least one of the preceding claims, wherein the polycarboxylate ether has side chains linked to a main chain via ester, amide and/or ether groups, wherein the main chain has at least one acrylic acid moiety or a salt thereof and/or at least one methacrylic acid moiety or a salt thereof.

8. The epoxy resin composition according to at least one of the preceding claims, wherein the polycarboxylate ether comprises:
a) at least one acid moiety A of formula I): 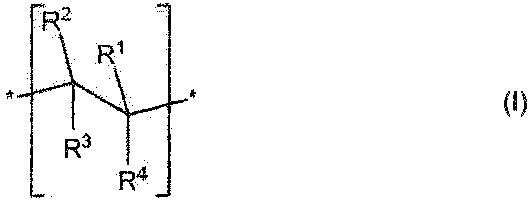
wherein each R¹, R² and R³ independently of one another represents H, -COOM, -CH₂COOM or an alkyl group having 1 to 5 carbon atoms,
each R⁴ independently of one another represents -COOM,-CH₂COOM, -S0₂-OM, -O-PO(OM)₂ and/or -PO(OM)₂;
or wherein R³ together with R⁴ forms a CO-O-CO-ring; wherein M represents H, an alkali metal, an alkaline earth metal, ammonium, an ammonium cation, an organic ammonium compound, or mixtures thereof;
with the proviso that overall one or two of R¹, R², R³ and R⁴ is/are acid groups,
wherein the acid moiety **A** is preferably an acrylic acid moiety or a salt thereof and/or a methacrylic acid moiety or a salt thereof; and
b) at least one structural moiety **B** of formula (II); 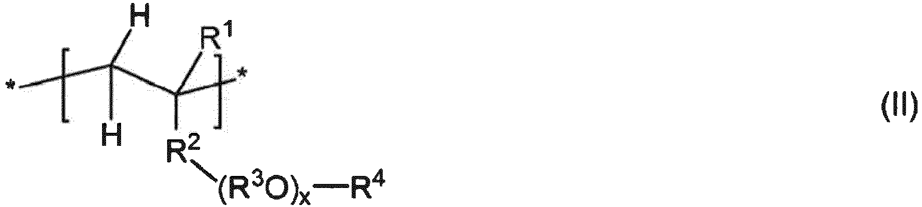 wherein
R¹ independently of one another represents H or CH_{3;}
R² independently of one another represents an ester group -CO-O- or an amide group -CO-NH-;
R³ independently of one another represents a C₂-C₆ alkylene group, in particular an ethylene or propylene group,
R⁴ independently of one another represents H, a C₁-C₁₂ alkyl or cycloalkyl radical, a C₇-C₂₀ alkylaryl or aralkyl radical, or a substituted or unsubstituted aryl radical, or a monovalent organic radical having 1 to 30 carbon atoms, which optionally comprises heteroatoms, and
x independently of one another represents a value between 3 and 250,
wherein the main chain of the polycarboxylate ether is a linear copolymer which was obtained by polymerization using said at least one acid moiety or a salt or anhydride thereof,
wherein said structural moiety **B** is a component of this linear copolymer.

9. The epoxy resin composition according to at least one of the preceding claims, wherein the polycarboxylate ether has at least one further structural moiety **C,** which is different from the structural moieties **A** and **B,** and which is selected from an ether, ester, amide or imide moiety, an acid moiety selected from carboxylic acid, sulfonic acid, phosphonic acid, phosphoric acid ester, carbonylamidomethylpropanesulfonic acid and salts thereof, or a polyoxyalkyleneoxycarbonyl, polyoxyalkyleneaminocarbonyl, polyoxyalkyleneoxyalkyl, polyoxyalkyleneoxy, hydroxyethyloxycarbonyl, acetoxy, phenyl or N-pyrrolidonyl group,
wherein the polycarboxylate ether preferably comprises 5 to 95 mol%, preferably 10 to 80 mol% acrylic acid moieties **A** and/or methacrylic acid moieties **M,**
5 to 50 mol%, preferably 10 to 40 mol% structural moiety **B,** and
0 to 30 mol%, preferably 0 to 15 mol% structural moiety **C,** in each case based on the total number of monomeric moieties in the main chain of the polycarboxylate ether.

10. A multi-component system for producing a curable epoxy resin composition according to at least one of the preceding claims, comprising at least
one component K1 containing said at least one epoxy resin, and
optionally a curing agent component K2 containing said at least one curing agent,
wherein at least one curing agent is contained in said component K1 or K2,
wherein said at least one inorganic filler coated with the polycarboxylate ether is contained in said component K1, K2, and/or a further component K3.

11. The multi-component system according to claim 10, comprising at least
one component K1 containing at least one epoxy resin,
one component K2 containing at least one curing agent, and
one solid component K3 containing
(a) 93 to 99.7 wt.% inorganic fillers,
(b) 0.01 to 2 wt.% polycarboxylate ether, and
(c) 0.02 to 5 wt.% solvent.

12. A cured epoxy resin obtainable by curing an epoxy resin composition according to at least one of claims 1 to 9 or by mixing the components and curing a multi-component system according to at least one of claims 10 to 11.

13. A use of polycarboxylate ethers as a dispersing agent for inorganic fillers in curable epoxy resin compositions.

14. Use of an epoxy resin composition according to at least one of claims 1 to 9 or of a multi-component system according to at least one of claims 10 to 11 for bonding, coating or sealing of substrates and/or for producing of moldings.

15. A solid filler which is coated with a polycarboxylate ether, for use as component K3 in a multi-component system according to at least one of claims 3 to 11, containing
(a) 93 to 99.97 wt.% inorganic fillers,
(b) 0.01 to 2 wt.% polycarboxylate, and
(c) 0.02 to 5 wt.% organic solvent.

## Revendications

1. Composition durcissable de résine époxyde, contenant une résine époxyde ayant en moyenne plus d'un groupe époxyde par molécule, au moins une charge inorganique et au moins un éther polycarboxylique, la charge inorganique étant revêtue de l'éther polycarboxylique.

2. Composition de résine époxyde selon la revendication 1, dans laquelle la charge inorganique revêtue a été obtenue par imprégnation avec une solution ou une suspension qui contient l'éther polycarboxylique et un solvant.

3. Composition de résine époxyde selon au moins l'une des revendications précédentes, dans laquelle le solvant est un solvant organique polaire, en particulier un ester, un éther ou un alcool.

4. Composition de résine époxyde selon au moins l'une des revendications précédentes, dans laquelle les charges inorganiques comprennent une proportion de charges très fines qui est d'au moins 5 % en poids ou d'au moins 10 % en poids par rapport au poids total des charges inorganiques.

5. Composition de résine époxyde selon au moins l'une des revendications précédentes, contenant en outre au moins un durcisseur et/ou au moins un diluant réactif.

6. Composition de résine époxyde selon au moins l'une des revendications précédentes, dans laquelle
la résine époxyde contient au moins un éther glycidylique, et/ou
le durcisseur contient au moins une polyamine, qui de préférence est choisie dans le groupe consistant en les diamines, triamines, tétraamines, polyamines ayant plus de quatre groupes amino par molécule, primaires, aliphatiques, cycloaliphatiques ou arylaliphatiques, les polyamines comprenant des groupes amino secondaires, les produits d'addition amine/polyépoxyde, les poly(éthylène-imines), les polyamidoamines, les bases de Mannich et les copolymères butadiène/acrylonitrile terminés par des groupes amino, et/ou
la charge inorganique comprend au moins une charge qui est choisie parmi les composés du silicium, tels que le dioxyde de silicium, les silicates et les silices précipitées et pyrogènes, les oxydes métalliques tels que le dioxyde de titane, l'oxyde de fer, l'alumine, l'oxyde de zinc et l'oxyde de magnésium ; les carbonates métalliques tels que le carbonate de calcium ou la dolomite ; les sulfates métalliques tels que le sulfate de calcium et le sulfate de baryum ; les hydroxydes métalliques tels que l'hydroxyde d'aluminium, les nitrures ou carbures, les minéraux argileux tels que le kaolin, les cendres volantes, le ciment, les verres et les matériaux céramiques.

7. Composition de résine époxyde selon au moins l'une des revendications précédentes, dans laquelle l'éther polycarboxylique comprend des chaînes latérales liées à la chaîne principale par l'intermédiaire de groupes ester, amide et/ou éther, la chaîne principale comprenant au moins un motif acide acrylique ou un sel de celui-ci et/ou au moins un motif acide méthacrylique ou un sel de celui-ci.

8. Composition de résine époxyde selon au moins l'une des revendications précédentes, dans laquelle l'éther polycarboxylique comprend :
a) au moins un motif acide A de formule (I) : 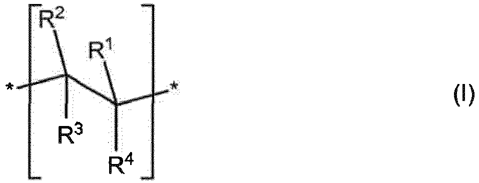
dans laquelle chaque R¹, R² et R³ représente indépendamment des autres H, -COOM, -CH₂COOM, ou un groupe alkyle ayant 1 à 5 atomes de carbone,
chaque R⁴ représente indépendamment des autres -COOM, -CH₂COOM, -SO₂-OM, -O-PO(OM)₂ et/ou -PO(OM)₂ ;
ou dans laquelle R³ forme avec R⁴ un cycle -CO-O-CO- ;
où M représente H, un métal alcalin, un métal alcalino-terreux, l'ammonium, un cation ammonium, un composé organique de l'ammonium ou des mélanges de ceux-ci ;
à la condition qu'au total un résidu R¹, R², R³ et R⁴ unique ou deux d'entre eux soient des groupes acides,
le motif acide A étant de préférence un motif acide acrylique ou un sel de celui-ci et/ou un motif acide méthacrylique ou un sel de celui-ci ; et
b) au moins un motif structural B de formule (II) : 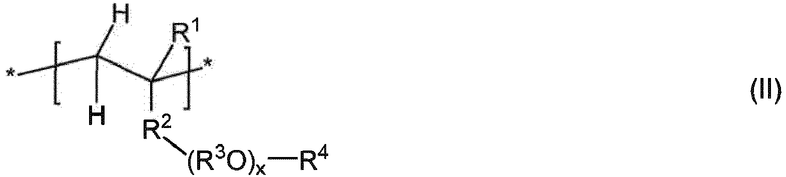 dans laquelle
R¹ représente indépendamment les uns des autres H ou CH₃ ;
R² représente indépendamment les uns des autres un groupe ester -CO-O- ou un groupe amide -CO-NH- ;
R³ représente indépendamment les uns des autres un groupe alkylène en C₂-C₆, en particulier un groupe éthylène ou propylène,
R⁴ représente indépendamment les uns des autres H, un radical alkyle en C₁-C₁₂ ou cycloalkyle, un radical alkylaryle ou aralkyle en C₇-C₂₀, ou un radical aryle substitué ou non-substitué, ou un radical organique monovalent ayant 1 à 30 atomes de carbone, qui éventuellement comprend des hétéroatomes, et
x a indépendamment les uns des autres une valeur comprise entre 3 et 250,
la chaîne principale de l'éther polycarboxylique étant un copolymère linéaire, qui a été obtenu par polymérisation, par utilisation d'au moins un motif acide ou d'un sel ou un anhydride de celui-ci,
le motif structural B étant un constituant de ce copolymère linéaire.

9. Composition de résine époxyde selon au moins l'une des revendications précédentes, dans laquelle l'éther polycarboxylique comprend un motif structural supplémentaire C, qui est différent des motifs structuraux A et B, et qui est choisi parmi un motif éther, ester, amide ou imide, un motif acide, choisi parmi les esters d'acides carboxyliques, d'acides sulfoniques, d'acides phosphoniques, d'acides phosphoriques, l'acide carbonylamidométhylpropanesulfonique et ses sels, ou un groupe polyoxyalkylénoxycarbonyle, polyoxyalkylénaminocarbonyle, polyoxyalkylénoxyalkyle, polyoxyalkylénoxy, hydroxyéthyloxycarbonyle, acétoxy, phényle ou N-pyrrolidonyle,
l'éther polycarboxylique comprenant de préférence 5 à 95 % en moles, de préférence 10 à 80 % en moles de motifs acide acrylique A et/ou de motifs acide méthacrylique M,
5 à 50 % en moles, de préférence 10 à 40 % en moles, du motif structural B et
0 à 30 % en moles, de préférence 0 à 15 % en moles du motif structural C,
chacun par rapport au nombre total de tous les motifs monomères de la chaîne principale de l'éther polycarboxylique.

10. Système multicomposant pour la préparation d'une composition durcissable de résine époxyde selon au moins l'une des revendications précédentes, comprenant au moins
un composant K1, contenant la ou les résines époxydes, et
éventuellement un composant durcisseur K2, contenant le ou les durcisseurs,
au moins un durcisseur étant contenu dans le composant K1 ou K2,
la ou les charges inorganiques revêtues de l'éther polycarboxylique étant contenues dans le composant K1, K2 et/ou dans un composant supplémentaire K3.

11. Système multicomposant selon la revendication 10, comprenant au moins :
un composant K1 contenant au moins une résine époxyde,
un composant K2 contenant au moins un durcisseur, et
un composant solide K3 contenant :
(a) 93 à 99,7 % en poids de charges inorganiques,
(b) 0,01 à 2 % en poids d'éthers polycarboxylique, et
(c) 0,02 à 5 % en poids de solvants.

12. Résine époxyde durcie, pouvant être obtenue par durcissement d'une composition de résine époxyde selon au moins l'une des revendications 1 à 9 ou par mélange des composants et durcissement d'un système multicomposant selon au moins l'une des revendications 10 à 11.

13. Utilisation d'éthers polycarboxylique en tant que dispersants pour charges inorganiques dans des compositions durcissables de résine époxyde.

14. Utilisation d'une composition de résine époxyde selon au moins l'une des revendications 1 à 9 ou d'un système multicomposant selon au moins l'une des revendications 10 à 11 pour le collage, le revêtement ou l'étanchéification de substrats et/ou pour la fabrication d'objets moulés.

15. Charge solide, qui est revêtue d'un éther polycarboxylique, pour utilisation en tant que composant K3 dans un système multicomposant selon au moins l'une des revendications 3 à 11, contenant
(a) 93 à 99,97 % en poids de charges inorganiques,
(b) 0,01 à 2 % en poids d'éthers polycarboxylique, et
(c) 0,02 à 5 % en poids de solvants organiques.
